# NEW EUROPEAN PATENT SPECIFICATION

(11) **EP 3 391 102 B2**
(45) Date of publication and mention of the opposition decision: **01.11.2023**
(45) Mention of the grant of the patent: 27.01.2021
(21) Application number: 15828607.0
(22) Date of filing: 18.12.2015
(51) Int. Cl.: G02B 3/00, G02B 3/08, G02B 27/60, B44F 1/02, B44F 1/10, B42D 25/342, B42D 25/373, B42D 25/324

(54) **SINGLE LAYER IMAGE PROJECTION FILM**
EINLAGIGE BILDPROJEKTIONSFOLIE
FILM DE PROJECTION D'IMAGE MONOCOUCHE

(43) Date of publication of application: 24.10.2018
(73) Proprietor: Visual Physics, LLC, Alpharetta, GA 30005 (US)
(72) Inventor: CAPE, Samuel, M., Woodstock, GA 30189 (US); STEENBLIK, Richard, A., Kilauea, HI 96754 (US); JORDAN, Gregory, R., Cumming, GA 30040 (US)
(74) Representative: Grünecker Patent- und Rechtsanwälte PartG mbB
(86) International application number: PCT/US2015/066807
(87) International publication number: WO 2017/105504

(56) References cited:
- EP-A1- 2 889 152
- EP-A2- 2 886 356
- WO-A1-99/23513
- WO-A1-2011/107793
- WO-A1-2014/012667
- US-A1- 2003 179 364
- US-A1- 2014 367 957

## Description

### BACKGROUND

Various optical materials have been employed to provide authentication of currency and documents, to identify and distinguish authentic products from counterfeit products, and to provide visual enhancement of manufactured articles and packaging. The evolution of such material stems largely from the search for a mechanism to resist counterfeiting of certain articles and products, or alternatively to render such copying obvious. Examples of optical materials used in anti-counterfeiting applications include holographic displays, as well as image systems that rely on lenticular structures or arrays of micro-lenses to project images that exhibit optical effects which cannot be reproduced using traditional printing and/or photocopying processes.

Optical materials based upon the concept of moiré magnification are particularly attractive for use in anti-counterfeiting applications. Such materials typically include a top lens layer, an intermediate substrate (an optical spacer), and a bottom print or object layer which contains micro-object(s) that are to be magnified or otherwise altered when viewed through the lenses. Such materials can create attractive visual effects that can be desirable in anti-counterfeiting and aesthetic applications.

From US2014/367957 A1, moiré-type magnification systems are known. The moire magnification systems can comprise a surface and a periodic array of image relief microstructures having a periodic surface curvature disposed on or within the surface. The image relief microstructures can have a first image repeat period along a first image reference axis within the array, and the periodic surface curvature can have a first curvature repeat period along a first curvature reference axis within the array. Transmission of light through the array, reflection of light from the array, or a combination thereof forms a magnified moiré image.

While existing optical materials can produce a variety of visual effects, new optical materials are continually needed to stay ahead of the counterfeiter's ability to access or develop new imaging technologies.

### SUMMARY

The invention is defined by the appended claims.
Moiré-type magnification systems are provided. The moire magnification systems can comprise a surface and a periodic array of image relief microstructures having a periodic surface curvature disposed on or within the surface. The image relief microstructures can have a first image repeat period along a first image reference axis within the array, and the periodic surface curvature can have a first curvature repeat period along a first curvature reference axis within the array. Transmission of light through the array, reflection of light from the array, or a combination thereof forms a magnified moire image.

The radius of curvature of the arcuate image generating surfaces present in the image relief microstructures (and by extension the radius of curvature of the periodic surface curvature) can be varied. In some embodiments, the radius of curvature of the arcuate image generating surfaces present in the image relief microstructures (and by extension the periodic surface curvature) can be from 1 micron to 500 microns.

The arcuate image generating surfaces of the image relief microstructures in the array can have convex or concave periodic surface curvature across the array. In certain embodiments, the periodic surface curvature of the array is convex.

As described above, the image relief microstructures can have a first image repeat period along a first image reference axis within the array, and the periodic surface curvature can have a first curvature repeat period along a first curvature reference axis within the array. The first image repeat period and the first curvature repeat period can vary in size, depending on the desired dimensions and characteristics of the resulting moire-type magnification system. In some embodiments, the first image repeat period is from 1 micron to 1000 microns, and the first curvature repeat period is from 1 micron to 1000 microns.

The ratio of the first image repeat period to the first curvature repeat period can be varied to provide for varied visual effects. In some embodiments, the ratio of the first image repeat period to the first curvature repeat period can be 1. In other embodiments, the ratio of the first image repeat period to the first curvature repeat period can be less than 1. In other embodiments, the ratio of the first image repeat period to the first curvature repeat period can be greater than 1. In some embodiments, the periodic surface curvature and the image relief microstructures can be aligned, such that the first curvature reference axis is parallel or coincident with the first image reference axis. In other embodiments, the periodic surface curvature is skewed relative to the image relief microstructures, such that the first curvature reference axis is not parallel to or coincident with the first image reference axis.

By varying and/or combining the above features (e.g., scaling of the first image repeat period relative to the first curvature repeat period, skew of the periodic surface curvature relative to the image relief microstructures, etc.), moire-type magnification systems that display a variety of visual effects, such as movement, can be obtained. In some cases, the magnified moire image appears to lie on a spatial plane above or below the moire-type magnification system. In some embodiments, the magnified moire image appears to move between a spatial plane beneath the system and a spatial plane above the system upon rotation of the system about an axis perpendicular to the surface. In some embodiments, the magnified moire image appears to transform from a first form, shape, size or color to a second form, shape, size or color upon rotation of the system about an axis parallel to the surface. In certain embodiments, the magnified moire image can appear to slide counter-directionally within a plane parallel to or coplanar with the surface upon rotation of the system about an axis parallel to the surface.

The moire-type magnification systems can be provided in a variety of forms, depending on the intended application for the system. In certain embodiments, the moire-type magnification systems can be formed on an article or packaging for the article, for example, by embossing, casting, molding, or stamping the array of image relief microstructures on the article or packaging for the article. In certain embodiments, the moire-type magnification systems can be formed on a substrate (*e.g*., a polymer film or metallic foil) that can be applied to an article or packaging for the article.

The moire-type magnification systems can be employed to provide authentication of articles (*e.g*., as a security and anti-counterfeiting feature to identify and distinguish authentic products from counterfeit products) and/or to provide visual enhancement of manufactured articles and packaging. By way of example, the moire-type magnification systems can be employed on a document or packaging for a document. The document can be, for example, a banknote, a check, a money order, a passport, a visa, a vital record (*e.g*., a birth certificate), an identification card, a credit card, an atm card, a license, a tax stamp, a postage stamp, a lottery ticket, a deed, a title, a certificate, or a legal document. By way of example, the moire-type magnification systems can be employed to provide visual enhancement of an article, such as coinage, CDs, DVDs, or Blu-Ray Discs, or packaging, such as aluminum cans, bottles (*e.g*., glass or plastic bottles), plastic film, or foil wrappers.

Also provided are methods of making the moire-type magnification systems described herein. Methods of making moire-type magnification systems can comprise forming a periodic array of image relief microstructures having a periodic surface curvature on or within a surface. The periodic array of image relief microstructures can be formed by a variety of suitable methods, including embossing, casting, molding, and stamping. Also provided are hard and soft embossing masters comprising the moire-type magnification systems described herein.

### DESCRIPTION OF DRAWINGS

FIG. 1 is a cross-sectional view of a multilayer moire magnifier device that includes a two-dimensional array of lenses positioned above an array of icons. The lenses are separated from the array by an optical spacer. The device produces a synthetically magnified image through the unified performance of a multiplicity of individual lens/icon image systems.
FIG. 2 is a cross-sectional view of a multilayer moire magnifier device with slicing lines corresponding to image regions.
FIG. 3A is a cross-sectional view of an ImageArc device. In this example device, the image relief microstructures are positive image representation, and thus have footprints that correspond to underlying image element regions in the device illustrated in FIG. 1 and FIG. 2.
FIG. 3B is a cross-sectional view of an ImageArc device. In this example device, the image relief microstructures are negative image representation, and thus have footprints that correspond to the background in which the image element regions are presented in the device illustrated in FIG. 1 and FIG. 2.
FIG. 3C depicts the directional behavior of light after interacting with an ImageArc device.
FIG. 3D is an isometric view of an array of an ImageArc device.
FIG. 4 shows a two-dimensional image array with hexagonal lattice structure.
FIG. 5 shows two-dimensional curvature array with hexagonal lattice structure.
FIG. 6 shows an overlaid image array and curvature array.
FIG. 7 shows a layer scaling operation. Here, an overlaid image array and curvature array are illustrated. In this example, the image array has a different scaling than the curvature array. Specifically, the image repeat period of the image array is smaller than the curvature repeat period of the curvature array.
FIG. 8 shows a "skew" operation. Here, an overlaid curvature array is rotated with respect to an image array.
FIGS. 9A-9I illustrate methods for fabricating a master. FIG. 9A illustrates an aluminum coated glass substrate with photoresist.
FIG. 9B illustrates an exposure step in creating the master.
FIG. 9C shows the result of the patterning step. FIG. 9D shows shaped curvature structures.
FIG. 9E shows photopolymer applied over curvature structures to make a soft curvature master.
FIG. 9F shows exposure of photoresist in the soft curvature master voids.
FIG. 9G shows a soft embossing master with negative image relief microstructures.
FIG. 9H shows photopolymer replication of the negative ImageArc master.
FIG. 9I shows the resulting ImageArc device comprising positive image relief microstructures.
FIGS. 10A-10D illustrate how the curvature can be altered by varying the thickness of photoresist prior to patterning.

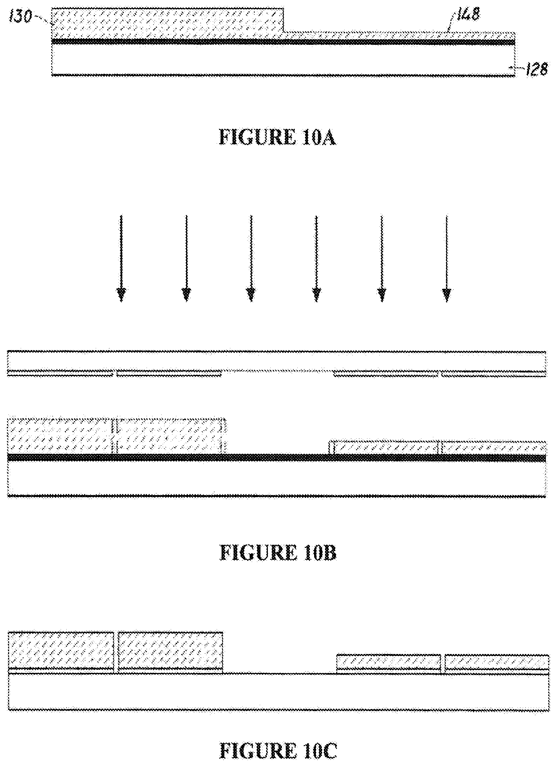

FIG. 10A illustrates two thicknesses of photoresist.
FIG. 10B illustrates an exposure step.
FIG. 10C shows the result of the patterning step with two different photoresist coating thicknesses.

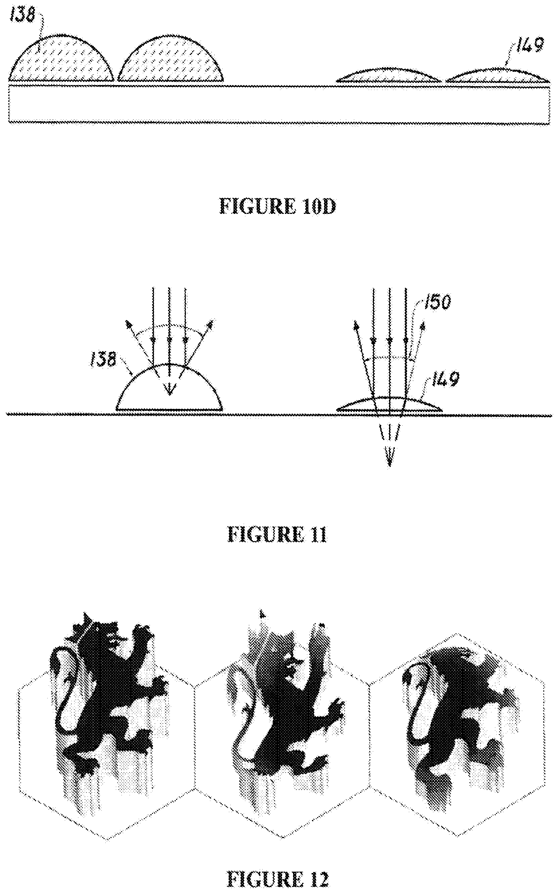

FIG. 10D shows the two different curvature profiles that are obtained.
FIG. 11 illustrates the differences in field-of-view that result from employing different curvature profiles.
FIG. 12 shows image relief microstructures that have no surface curvature (left), concave surface curvature (center), and convex surface curvature (right).

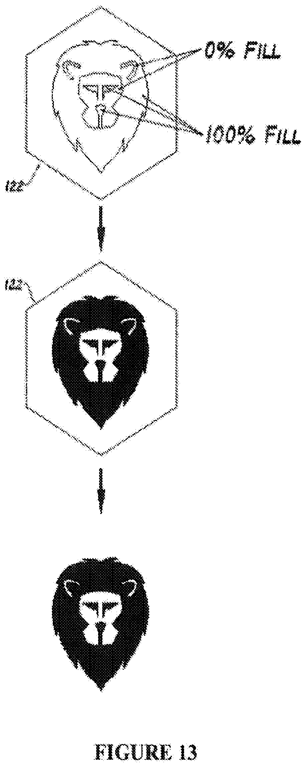

FIG. 13 illustrates an image relief design having binary shading from single unit cell.

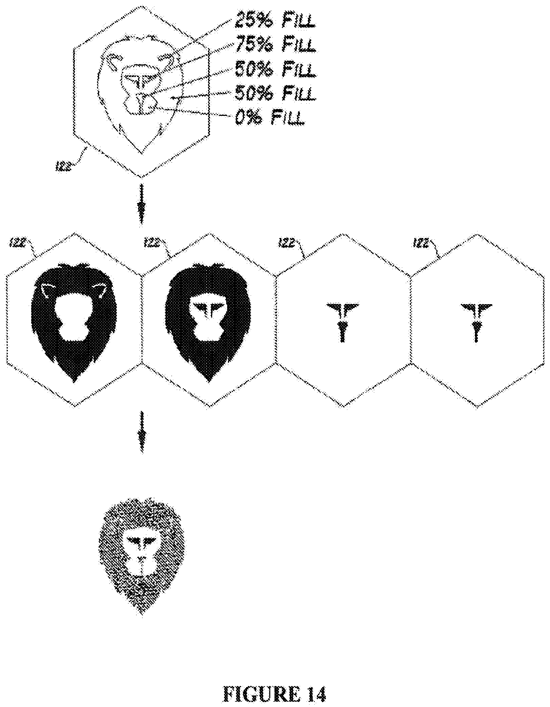

FIG. 14 illustrates an image relief design having multi-level shading from multiple unit cells.

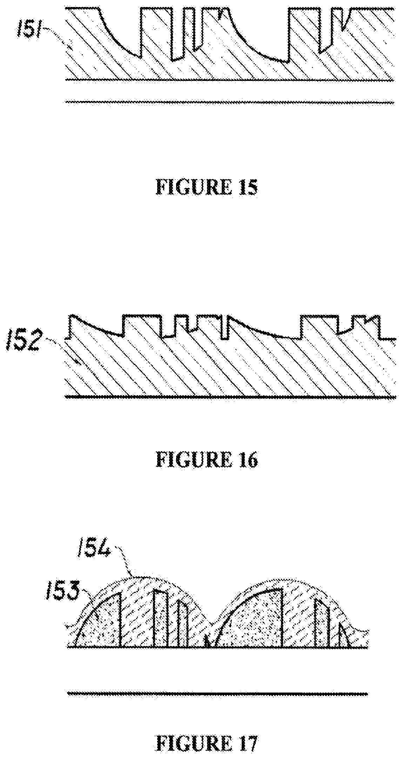

FIG. 15 shows an ImageArc device that includes (-) relief image relief microstructures having concave periodic surface curvature.
FIG. 16 shows an ImageArc device (-) -relief image relief microstructures having concave periodic surface curvature.
FIG. 17 shows an ImageArc device having an array of (+)-relief image relief microstructures having convex periodic surface curvature. The image relief microstructures are formed from a reflective powder material and over-coated.

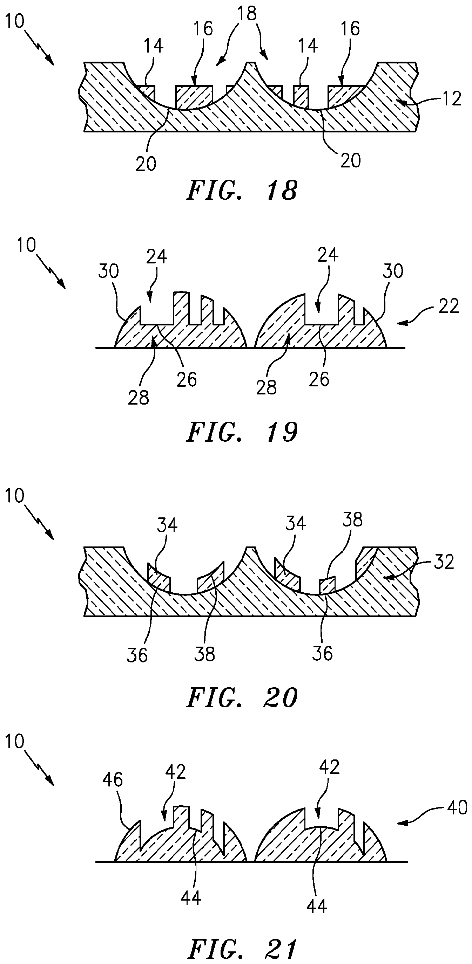

FIG. 18 is a cross-sectional view of another contemplated embodiment in which the single layer image presentation system includes an arrangement of optionally reflective arcuate elements having an upper arcuate surface with a concave surface curvature, a lower surface, and an arcuate area bounded by the upper arcuate and lower surfaces. (+)-relief image relief microstructures extend upwardly from the upper arcuate surfaces, terminating to form horizontal "upper" surfaces within areas defined by the curvature of the upper arcuate surfaces.
FIG. 19 is a cross-sectional view of yet another contemplated embodiment in which the single layer image presentation system includes an arrangement of optionally reflective arcuate elements having an upper arcuate surface with a convex surface curvature. (-)-relief image relief microstructures extend down from these surfaces terminating to form horizontal "lower" surfaces within the arcuate area.
FIG. 20 is a cross-sectional view of a not claimed example, which is similar to the system shown in FIG. 18. The (+)-relief image relief microstructures, however, terminate to form a second arcuate or curved surface that is parallel to the upper arcuate surfaces.
FIG. 21 is a cross-sectional view of a not claimed example, which is similar to the system shown in FIG. 19. The (-)-relief image relief microstructures, however, terminate to form a second arcuate or curved surface that is parallel to the upper arcuate surfaces.

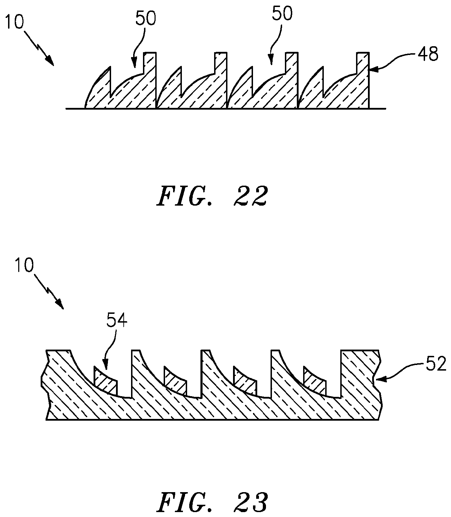

FIG. 22 is a cross-sectional view of yet another not claimed example, where instead of full hemispheres, the convex arcuate image generating surfaces are partial convex hemispheres.
FIG. 23 is a cross-sectional view of yet another not claimed example, where instead of full hemispheres, the concave arcuate image generating surfaces are partial concave hemispheres.

### DETAILED DESCRIPTION

Integral image and moire magnification devices have been employed to provide authentication of currency and documents, to identify and distinguish authentic products from counterfeit products, and to provide visual enhancement of manufactured articles and packaging. These optical devices are generally multilayer constructions that include a lens array, an optical spacer, and an image array. The lens array and the image array in these devices can be configured to possess varying scale ratios and axial rotations relative to one another, allowing them to display enlarged composite images. These devices can exhibit image movement with tilt, low sensitivity to lighting conditions, and wide viewing angle.

Holograms, which compete in some of the same market applications, enjoy certain advantages such as thin cross section, low cost due to fewer required layers, and no requirement to align multiple layers during their manufacture. Holograms show optical variability with tilt, but rely on a strong point light source due to their reliance on light diffraction.

Moire magnification refers to a phenomenon that occurs when a grid comprised of identical image objects is viewed through a lens grid having approximately the same grid dimension. A composite image (i.e., a magnified moire image) is created from individual images generated by the individual image systems (i.e., lens and image object) in the grids. By varying the relative scale and rotation of lens grid and the grid of image objects, many variations of the magnified moire image are possible, providing stereoscopically perceived effects, such as images that appear to lie above the plane of the grids, images that appear to lie below the plane of the grids, and images that appear to move or slide orthogonally within the plane of the grids as the grids are tilted. The fundamental operating principle of such moire magnification arrangements is described, for example, in the article "The moire magnifier," M. C. Hutley, R. Hunt, R. F. Stevens and P. Savander, Pure Appl. Opt. 3 (1994), pp. 133-142.

Provided herein are moire-type magnification systems. The systems can produce stereoscopic moire magnification effects using a simplified projection system described herein, and subsequently referred, to as "ImageArc." ImageArc can be used to form low cost, optically variable structures for overt protection of products and documents, articles for sale, from counterfeiting, as well as a means of improving the aesthetic value of the product.

The moire-type magnification systems can include a surface relief microstructure array for controlling light transmission and/or reflection for the purpose of projecting images having stereoscopically perceived movement and depth. The surface relief microstructure array can include a periodic array of micro-scale, three-dimensional image shapes. The image shapes in the array can exhibit periodic surface curvature across the array, resulting in a periodic array of image relief microstructures that have a periodic surface curvature with a periodicity in relation to the periodicity of the array of image relief microstructures. By spatially varying the scale, rotation, and position of the periodic surface curvature relative to the periodic array of image relief microstructures, a moire magnifier arrangement is realized due to redirection of incident light impinging upon the arcuate image generating surfaces of the image relief microstructures, when viewed relative to un-featured (e.g., planar) regions of the surface that provide contrasting light intensity.

The moire-type magnification systems described herein can be configured to be reflective when reflective materials are used, transmissive when light transmitting materials are used, or a combination of both in cases where the material allows either reflection or transmission in different viewing conditions (*e.g*., in situations having normal levels of ambient lighting). The magnified moire images formed by ImageArc can exhibit dynamic movement resulting from light intensity modulation, and/or, in further variations, color variation.

The moire-type magnification systems described herein can be low cost (*e.g*., fundamentally lower cost than other moire magnification devices) because it is a single layer device. Cost is a severe limitation for many products that are manufactured in bulk yet have a need for optically variable overt authentication technology. A lower price point after considering each step in its creation to integration onto the desired final product is an important consideration, especially for use in conjunction with low-cost articles (*e.g*., banknotes, lottery tickets, etc.).

ImageArc can be formed in a single step (*e.g.*, a single embossment, casting, molding, or stamping). In many cases, the substrate on which the system will be positioned will already pass through equipment which is capable of forming ImageArc during the course of its production. Accordingly, ImageArc can be readily applied to such substrates by incorporating, for example, an embossing master having the requisite structure into an existing manufacturing process. This is in contrast to multilayer moire structures. Multilayer moire structures cannot be formed on a substrate in a single step; rather, they must be pre-manufactured using a multistep process, and applied to an article. If desired, the moire-type magnification systems described herein can also be fabricated to have a thinner cross section than multi layer moire magnifiers owing to their 'single-layer' design.

Production of the moire-type magnification systems described herein only requires multilayer registration during origination (*e.g.*, during production of a master), and not during manufacture. As a consequence, more sophisticated designs requiring precise registration alignment can be implemented (*e.g*., integral image patterns) without significantly increasing the difficulty and/or cost of production.

The moire-type magnification systems described herein utilize directional reflection or transmission from the arcuate image generating surfaces of the image relief microstructures to form a magnified moire image. As such, the system produces angle-dependent moire magnified images from a single surface array. This is in contrast to multilayer moire structures, where the moire image is produced from a first image array, and refracted through a second, separate array of lenses. Similarly, 'reflective-mode' moire magnifiers also rely on two separate arrays (i.e., a reflective lens array and an image array).

The moire-type magnification systems described herein do not necessarily require a substrate film, as is often found with other security products. Since the ImageArc structures can be manufactured directly onto the surface of many products, no additional film cost is incurred. Using ImageArc, synthetic composite images may be provided into preexisting lacquers or coatings, or into the material from which products are made, driving the additional manufacturing cost down to near zero while adding dramatically to the security of the embellished system. By way of example, the moire-type magnification systems described herein can be patterned onto and/or into a preexisting polymer coating on a banknote, patterned directly onto and/or into polymer banknotes, patterned directly onto and/or scratch off lottery tickets, patterned directly onto and/or into aluminum beverage cans, patterned directly onto and/or into consumer electronic enclosures, and patterned directly onto and/or into plastic or foil packaging. The moire-type magnification systems described herein can also be used to embellish vinyl textile materials, eyewear frames, and even into the surfaces of food items, such as candy.

### Moire Magnification Systems

As described above, the moire magnification systems provided herein can comprise a surface and a periodic array of image relief microstructures having a periodic surface curvature disposed on or within the surface. The design of such systems can be illustrated by first describing a multilayer moire magnifier device.

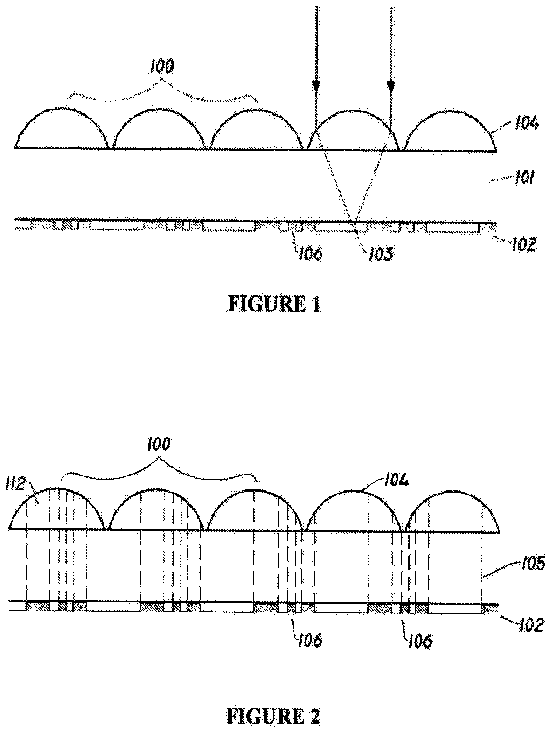

Referring now to the drawings, FIG. 1 shows a cross section of a moire magnifier device which includes a lens array 100, an optical spacer 101, and an image array (also referred to as an object array, an icon array, or a motif array) 102. An optical spacer 101 places the image array 102 at the focal point 103 of the lens array 100. Each lens 104 in lens array 100 images its portion of the image array in order to form a composite image.

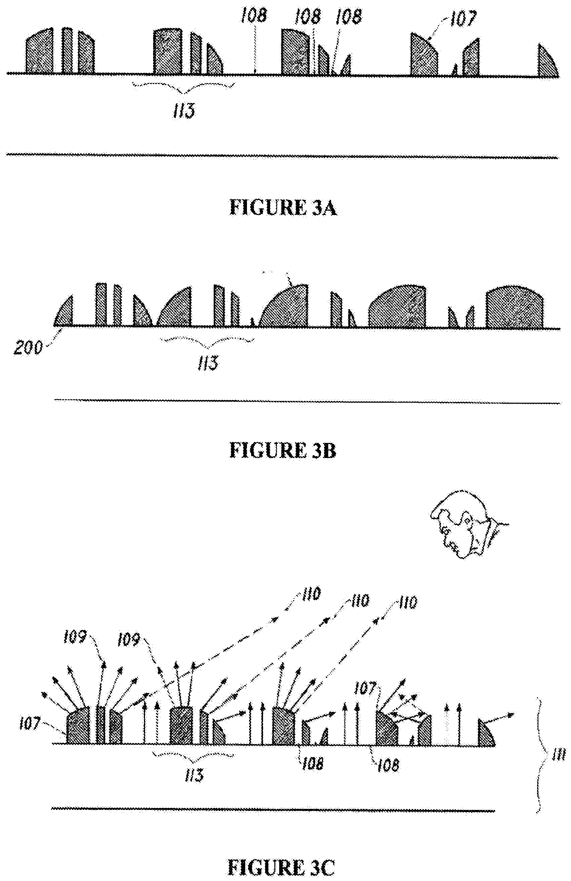

Referring now to FIG. 2, if one were to superimpose imaginary slicing lines 105 on the multilayer moire magnifier device shown in FIG. 1, drawn upwards from the image array 102 and intersects with the upper curvature of the lens array 100, subtraction of slices from the lens array 100 in the pattern prescribed by the footprint of the image element regions 106 generates a periodic array of image relief microstructures 107, as shown in FIG. 3A. The image relief microstructures illustrated in this example are (+)-relief image relief microstructures, meaning they upwardly project from the surface terminating in an arcuate image generating surface. The image relief microstructures in this example are a positive image representation, as discussed in more detail below. The arcuate image generating surfaces of the image relief microstructures in the array have a periodic surface curvature across the array. The image relief microstructures 107 are surrounded by a non-relieved surrounding area 108.

FIG. 3C illustrates the manner in which moire magnification images can be formed by light impinging upon the moire magnification system illustrated in FIG. 3A. Light impinging on the image relief microstructures is redirected by reflection. Normal-to-surface light rays 109 are reflected radially outward from the arcuate image generating surfaces of the image relief microstructures 107, while non-image areas 108 are simply reflected. From the vantage point of the viewer, each 'island' of structure with curvature, or image relief element 113, will present a point of light 110, (illustrated by dotted lines directed toward viewer) corresponding to a portion of a magnified moire image. The multiplicity of point reflections will contrast with the non-image portions 108, which are directed away from the viewer. In combination, the arcuate image generating surfaces of the image relief microstructures 107 and non-imaging areas 108 produce magnified images that are visible across a range of viewing angles. As the system 111 is tilted (or as the viewer's vantage point changes), the array of reflection points 110 that the viewer perceives will be reflected from different portions of the array of image relief microstructures, generating new images. As a consequence, the magnified moire images formed by the array can exhibit dynamic movement and/or depth effects.

FIG. 3B illustrates an example system employing image relief microstructures that are a negative image representation. If one were to use the same image slicing lines 105 illustrated in FIG. 2, and instead remove image area volumes 112, one would generates a similar periodic array of image relief microstructures 200, as shown in FIG. 3B. The image relief microstructures illustrated in this example are also (+)-relief image relief microstructures, meaning they upwardly project from the surface terminating in an arcuate image generating surface. However, the footprint of the image relief microstructures 107 corresponds to the background in which the image element regions are presented in the device illustrated in FIG. 1 and FIG. 2.

In systems that include image relief microstructures that are a positive image representation (*e.g.*, FIG. 3A) or a negative image representation (*e.g.*, FIG. 3B), the same image motif can be perceived, albeit with relative bright areas 110 and dark areas 109 reversed. In the case of the system illustrated in FIG. 3A, from most angles of view, the arcuate image generating surfaces of the image relief microstructures 107 will appear to have a greater relative light intensity or brightness relative to the background 108. However, from other angles, specular reflection from the background 108 will be directed towards the viewer, and the background 108 will instead appear bright and the arcuate image generating surfaces of the image relief microstructures 107 will appear darker. In the case of the system illustrated in FIG. 3B, the same effects will be observed, but with these intensities reversed.

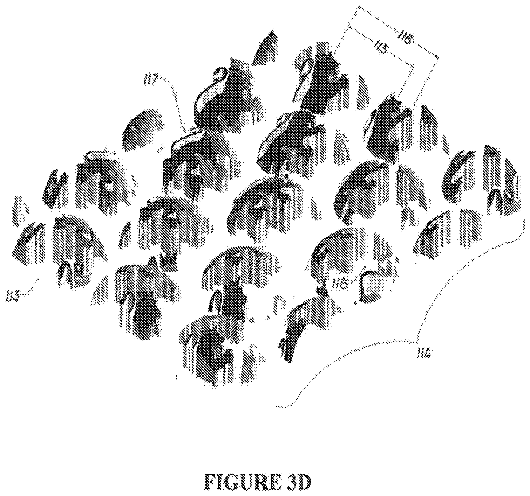

FIG. 3D illustrates an isometric view of a periodic array 114 of image relief microstructures 113 having a periodic surface curvature disposed on a surface. For purposes of illustration, a lion motif was selected as the image motif. Particular attention is given to the location of the lions with respect to the variation of the surface curvature. In this example, the periodicity of the lion images 115 (the image repeat period) is different from the periodicity of the surface curvature 116 (the curvature repeat period), so that in some regions of the array, the body of the lion and the crest of the surface curvature are coincident 117, and in other parts of the array they are not 118. The array depicted here represents only a small portion of a typical periodic array, which may include hundreds of thousands of microstructured reliefs.

By varying and/or combining aspects of the periodic array of image relief microstructures and the periodic surface curvature of the image relief microstructures (e.g., the scaling of the first image repeat period relative to the first curvature repeat period, skew of the periodic surface curvature relative to the image relief microstructures, etc.), moiré-type magnification systems that display a variety of visual effects, such as movement, can be obtained. All of the visual effects that can be generated using the moire magnification system (as well as the particular selection of array elements necessary to produce a given visual effect) are not reintroduced here in detail, as these effects have been described with respect to multilayer moire-type magnification systems. See, for example, U.S. Pat. No. 7,333,268 to Steenblik et al.. However, by way of example, certain design components that can be used to arrive at moiré magnification systems exhibiting varied visual effects are described below.

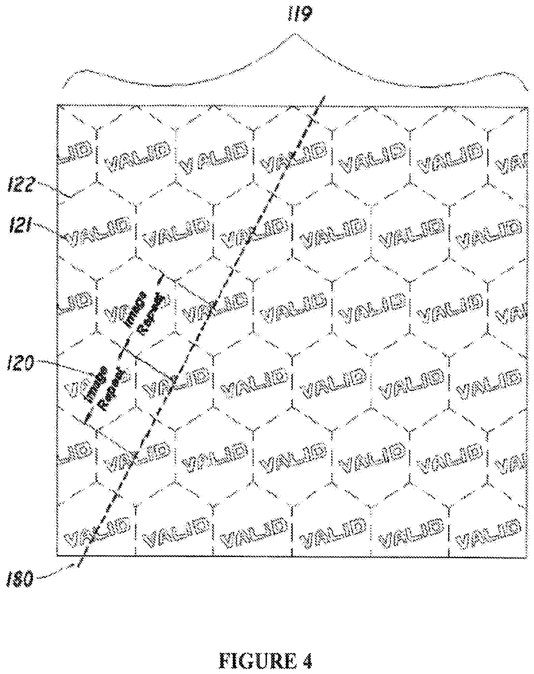

FIG. 4 illustrates an image array 119 having an image repeat period 120 along a first image reference axis 180 within the image array. For purposes of illustration, a textual image ("VALID") was selected as the image motif 121. The array type can be any of the known crystallographic lattice structures that can be defined by a repeatable two-dimensional 'unit cell.' A hexagonal lattice is depicted here that shows one image motif 121 per hexagonal unit cell 122, but will not be present in the final structure.

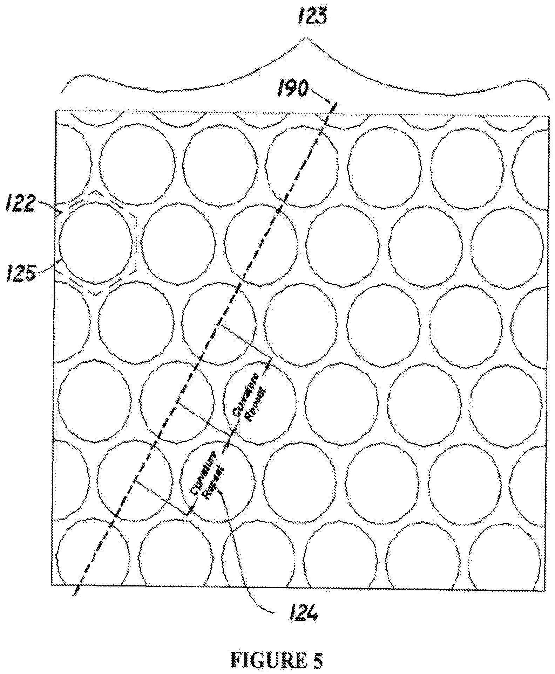

FIG. 5 illustrates a periodic curvature array 123, also having a curvature repeat period 124 along a first curvature reference axis 190 within the image array, and a lattice structure 122 of the same form as the image array 119 (in this case hexagonal). The curvature array 123 can be used to define a curvature mold that can be used during an intermediate step in the creation of ImageArc structures. The base geometry of the curvature elements 125 can be defined in this step, with alternative footprints possible. That is, the curvature footprints 125 may be circular or hexagonal, or the shape of any alternative lattice arrangements considered, and can be as large as the unit cell 122 or smaller. Here, the curvature footprints have circular base footprints. The array can be used to create an intermediate curvature array mold, where each curvature element will be hemispherical in shape with positive curvature. For purposes of illustration, the image array 119 and curvature array 123 begin as two-dimensional layer representations which will be given structure and height after first performing array manipulations.

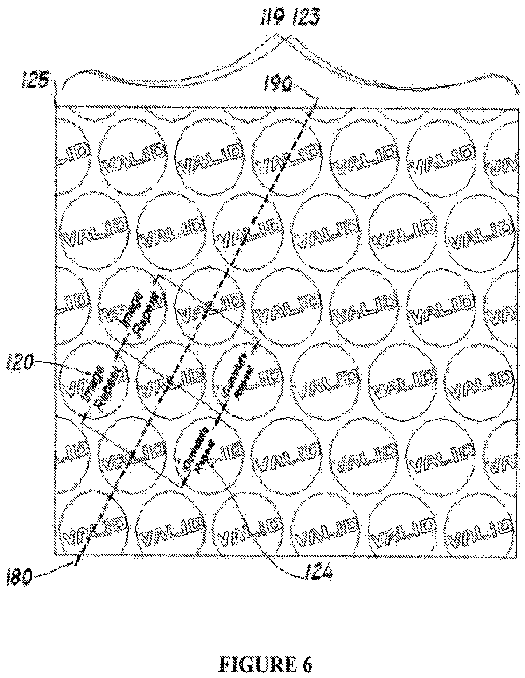

FIG. 6 illustrates an overlaid image array 119 and curvature array 123. In this example, the ratio of the first image repeat period 120 to the first curvature repeat period 124 is 1 (i.e., the first image repeat period is equal to the first curvature repeat period). In this embodiment, the image array 119 and the curvature array 123 are aligned such that the first curvature reference axis 190 is parallel and coincident with the first image reference axis 180.

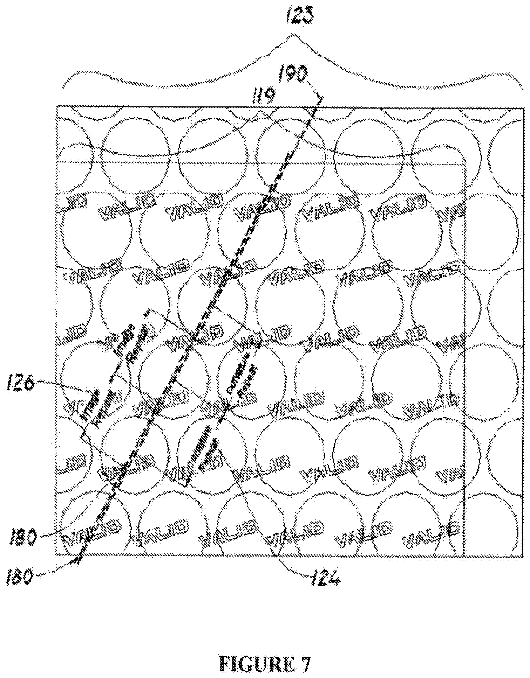

FIG. 7 illustrates a layer scaling operation. In this example, the image array 119 has different scaling than the curvature array 123. Specifically, the first image repeat period 126 is smaller than the first curvature repeat period 124, such that the distance between two repeating image elements is smaller than the distance between two curvature elements. This operation will result in a magnified moire image that appears to lie on a spatial plane beneath the system, once the corresponding ImageArc system is generated.

Depending on the difference in period of the curvature repeat period 124 and image repeat period 126, the resulting magnified moire image can be direct (right reading, where the textual image appears as "VALID") or reversed (wrong reading, where the textual image appears as "DILAV"). Erect magnified moire images can be formed in embodiments where the curvature repeat period 124 is larger than the image repeat period 126. Conversely, inverted moire images can be formed in embodiments where the curvature repeat period 124 is smaller than the image repeat period 126.

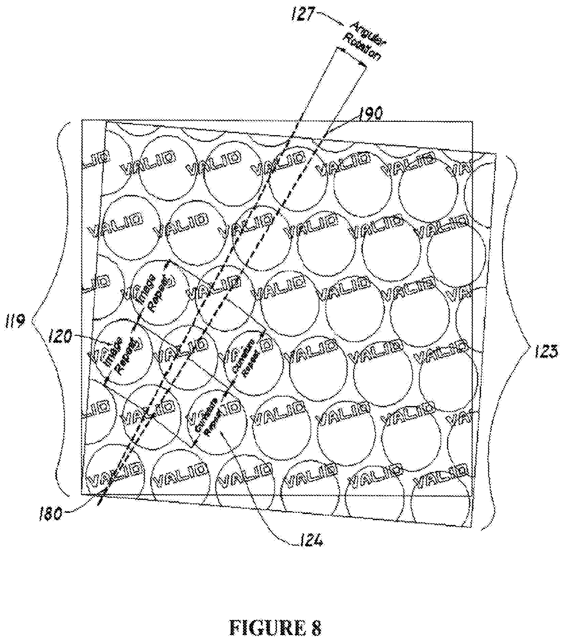

FIG. 8 illustrates a rotation or "skew" operation, in which an overlaid curvature array is rotated with respect to an image array. In this example, the ratio of the first image repeat period 120 to the first curvature repeat period 124 is 1. However, the curvature array 123 is rotated to a degree relative to the image array 119, such that the first curvature reference axis 190 is not parallel to or coincident with the first image reference axis 180. By virtue of the rotation operation 127, the image array 119 will have a new effective pitch, as referenced by the curvature array 123, which is larger than the original image repeat period 120. This new period ratio has the effect of reducing the moire image size, and provides for images that will appear to move or slide within the plane of the system in the opposite direction of tilt.

While the examples described above employ a single image array for clarity, the moire magnification systems provided herein can include multiple image arrays, each having their own scale and rotation relative to the curvature array to generate moire magnification systems exhibiting the visual effects desired for a particular application. For example the array of 'valid' images can be combined with a second image array having an "ok" motif with a different image repeat.

Once the array designs are generated, and their properties manipulated by scale and rotation, the layers will be ready for physical realization, where the image array design(s) and curvature array design can be merged or superimposed into one layer, such that common volumetric regions will be shared between the arrays. Methods of forming the moire magnification systems provided herein are discussed in more detail below.

The dimensions of the unit cells in the image arrays and curvature arrays described above can be varied, so as to afford moire magnification systems having the characteristics for a desired application. In some cases, the unit cell defining the image array, as measured between two lattice points on the unit cell, can be less than one millimeter (e.g., less than 250 microns, or less than 150 microns,). In some cases, the unit cell defining the image array, as measured between two lattice points on the unit cell, can be at least 1 micron (e.g., at least 10 microns, or at least 25 microns).

In some embodiments, the first image repeat period is from 1 micron to 1000 microns (e.g., from 1 micron to 500 microns, from 1 micron to 250 microns, from 1 micron to 150 microns, from 10 microns to 250 microns, from 10 microns to 250 microns, or from 10 microns to 150 microns), and the first curvature repeat period is from 1 micron to 1000 microns (e.g., from 1 micron to 500 microns, from 1 micron to 250 microns, from 1 micron to 150 microns, from 10 microns to 250 microns, from 10 microns to 250 microns, or from 10 microns to 150 microns).

Depending on the design of the moiré magnification system, systems that display a variety of visual effects can be generated. Example visual effects that can be observed include:
magnified moire images that appear to lie on a spatial plane beneath the system;
magnified moire images that appear to lie on a spatial plane above the system;
magnified moire images that appear to lie on a spatial plane coplanar with the system, and which appear to move or slide orthogonally with translation (*e.g*., counter-directional sliding);
magnified moiré images that appear to transform from one image form into another;
magnified moire images that depict an array of similar image motifs (*e.g.,* a wallpaper design);
magnified moiré images that depict a single object or scene and provide unique perspective with viewing angle (*e.g*., integral imaging, see, for example, U.S. Pat. No. 6,177,953 to Vachette et al.);
magnified moire images that appear to "turn on and off" (*e.g*., disappear and reappear) with change in viewing angle.

In some embodiments, the magnified moire image appears to lie on a spatial plane above or below the moire-type magnification system. In some embodiments, the magnified moire image appears to move between a spatial plane beneath the system and a spatial plane above the system upon rotation of the system about an axis perpendicular to the surface. In some embodiments, the magnified moiré image appears to transform from a first form, shape, size or color to a second form, shape, size or color upon rotation of the system about an axis parallel to the surface. In certain embodiments, the magnified moiré image can appear to slide counter-directionally within a plane parallel to or coplanar with the surface upon rotation of the system about an axis parallel to the surface.

Many other aspects of the moire magnification system can be varied to generate moire magnification systems exhibiting the characteristics and visual effects desired for a particular application. For example, the radius of curvature of the arcuate image generating surfaces present in the image relief microstructures (and by extension the radius of curvature of the periodic surface curvature) can be varied, as desired. As illustrated in FIG. 11, a lower curvature shape 149 will generally provide a narrower field of view 150 than one of higher curvature. The curvature element field of view can provide the range of viewing angles from the light source through which magnified moire images can be seen observed the viewer. Generally, the narrower the field of view, the brighter the appearance of the magnified moire images over the included range of angles. Conversely, the broader the field of view, the dimmer the magnified moire images appear over that field of view.

In some embodiments, the radius of curvature of the arcuate image generating surfaces present in the image relief microstructures (and by extension the periodic surface curvature) can be from 1 micron to 500 microns (*e.g*., from 1 micron to 250 microns, from 1 micron to 150 microns, from 10 microns to 250 microns, or from 10 microns to 150 microns).

The arcuate image generating surfaces of the image relief microstructures in the array can have convex or concave periodic surface curvature across the array. In certain embodiments, the periodic surface curvature of the array is convex. In other embodiments, the periodic surface curvature of the array is concave. Convex (positive curvature) features can be said to bulge away from the surface when the elements are viewed from above, as shown in FIG. 12 (right motif). Concave (negative curvature) features can be said to bulge inwards towards the substrate when the elements are viewed from above, as shown in FIG. 12 (center motif). For reference, a structure with no curvature is also illustrated in FIG. 12 (left motif).

In one embodiment, the arcuate image generating surfaces of the image relief microstructures in the array (and by extension the periodic surface curvature) exhibit the contour of a section of a convex hemisphere. For a symmetric convex reflector, the surface of the reflective region presents a mirror image at a focal point lying behind the reflector which, to the viewer, appears as a bright point at a distance of f=-R/2, where R is the radius of curvature.

In the examples illustrated above, interstitial spacing is present between curvature array elements for ease of manufacture; however, if desired, an intermediate curvature mold having 100% fill factor can be used to define the periodic surface curvature of the image relief microstructures.

Additionally, cylindrical geometry curvature elements can be used. Cylindrical geometry curvature elements can be used, for example, to produce moire magnification systems that produce magnified moire images that exhibit dynamic movement in only one direction of tilt.

The image relief microstructures may be constructed from two dimensional regions which constitute a partial or full portion of an image, number, text, shape, or other motif. When designing the image relief microstructure array for the system, a unit cell can be defined such that the contents of the cell may be arrayed in a periodic two-dimensional space filling configuration, where the unit cell contains at least one instance of a pattern to be repeated, and where it defines the packing structure of the relief elements. The packing structure, or lattice point arrangement, generally defines how the array will be constructed. Such lattice arrangements (the fundamental two-dimensional Bravais lattice arrangements) are known in the art of crystallography and include oblique, rectangular, rhombic, hexagonal, and square packing structures.

In this context, the term periodic array refers to a repeating, two-dimensional, space filling tessellation of unit cells (or repeat patterns) that can be repeated by translation to fill a surface with the contents of the unit cell (*e.g.,* like the tiling of a surface). The periodic array of unit cells can thus have translational symmetry, and their arrangement on the surface can be characterized by a two-dimensional crystallographic lattice arrangement (a fundamental two-dimensional Bravais lattice arrangement).

The array can be designed to produce a magnified moire image with a binary shading or light intensity profile and/or a magnified moire image with multi-level shading. FIG. 13 (top) illustrates a design using two-dimensional closed regions to illustrate a lion face motif. The design is fit into a unit cell 122, and the intent is to use binary shading. To accomplish this, only one unit cell with one instance of the pattern (middle) is required to generate an array that can produce a composite magnified moire image (bottom) that will also have binary shading or light intensity profile.

If desired, magnified moire images with multi-level shading can be generated using arrays defined using multiple unit cells. FIG. 14 illustrates an example where four cells (as opposed to one unit cell) define the image array. If four cells are used to generate the image relief array, then multi-level shading of the composite image can occur. For example, if three out of the four cells contain the eyes of the lion's face, the eyes will appear 75% shaded, or region-filled in the resulting composite magnified moire image.

Suitable materials for the fabrication of image relief microstructures include, by way of example, metals, ceramics, glasses, and plastics. As described above, the image relief microstructures can operate in reflective mode, in transmissive mode, or in partially reflective and partially transmissive mode to generate a magnified moire image. The composition of the image relief microstructures can be varied, if desired, to produce a given optical effect.

For example, in the case of moire magnification systems designed to produce magnified images upon reflection of light from the array, the image relief microstructures can be formed from a reflective material. Suitable reflections can be obtained using image relief microstructures formed from plastics, such as polycarbonate, polyvinyl chloride, ABS, polystyrene, and polyesters that can be molded to obtain mirror-like reflective surface reflection. Suitable reflections can be obtained using image relief microstructures formed from energy curable acrylate materials. In certain embodiments, the arcuate image generating surfaces of the image relief microstructures can be mirrored. Such highly reflective image relief microstructures can be formed, for example, by metallization (*e.g*., by vapor deposition of a metal such as aluminum), or by stamping or embossing a reflective material such as a metal foil.

In the case of moire magnification systems designed to produce magnified images upon transmission of light through the array, the image relief microstructures can be formed from suitable light transmitting material. In this way, the moire magnification system can produce images that are viewable when backlighting is provided to the reverse of the moire magnification system, and the moire magnification system viewed from the front. For example, by holding the moire magnification system up to the light and viewing (as when checking a banknote for presence of a watermark) the moire magnification system will produce easily observed images. Partially reflective and partially transmissive materials can also be used, for example by very thin metallic coatings, or by high refractive index materials such as zinc sulfide.

A variety of other materials can be incorporated (*e.g*., in or on the image relief microstructures, in or on the surface on or within which the image relief microstructures are formed, or a combination thereof) to convey a desirable appearance and/or optical effects. For example, non-fluorescing pigments, non-fluorescing dyes, fluorescing pigments, fluorescing dyes, metal, metal particles, magnetic particles, nuclear magnetic resonance signature materials, lasing particles, organic LED materials, optically variable materials, evaporated materials, sputtered materials, chemically deposited materials, vapor deposited materials, thin film interference materials, liquid crystal polymers, optical upconversion and/or downconversion materials, dichroic materials, optically active materials, optically polarizing materials, optically variable inks or powders, and combinations thereof can be incorporated. The image relief microstructures, the surface on or within which the image relief microstructures are formed, or a combination thereof can also be formed from materials having various appearances (*e.g*., metallic materials, glossy materials, matte materials, colored materials, transparent materials, opaque materials, fluorescent materials, etc.). By combining image relief microstructures formed from a first material with a surface formed from a second material, contrasting effects (*e.g*., glossy images on a matte background, matte images on a glossy background, colored images (transparent or opaque) on a colorless background (transparent or opaque), colorless images (transparent or opaque) on a colored background (transparent or opaque), etc.) can be created.

In some embodiments, the image relief microstructures, the surface on or within which the image relief microstructures are formed, or a combination thereof can comprise subwavelength surface modifications, such as holographic, photonic crystal, or interference coatings. Subwavelength structures can be used to alter the color, reflectivity, and/or absorption of the system. In some embodiments, light diffractive structures and/or photonic crystal structures can be incorporated in or on the image relief microstructures, in or on the surface on or within which the image relief microstructures are formed, or a combination thereof.

In some embodiments, the image relief microstructures, the surface on or within which the image relief microstructures are formed, or a combination thereof can comprise an optically variable ink or powder.

Printing inks may also be incorporated into image relief microstructures, the surface on or within which the image relief microstructures are formed, or a combination thereof. In some embodiments, the system can further comprise traditional print, such as selective overprinting and/or print lying beneath transparent regions of the system. If desired, the linewidth of images (*e.g.*, thin images vs. broad images) can be varied.

If desired, an overcoat can be applied to the system, covering the surface and/or the image relief microarray. The overcoat can be, for example, a glossy overcoat or varnish. FIG. 17 illustrates a moire magnification system that includes an overcoat covering the array of image relief microstructures. In this example, the image relief microstructures 153 can comprise a microparticulate reflective powder (*e.g*., the microstructures can be cast from a composition that includes microparticulate reflective powder. An overcoating 154 is provided over the microstructure array.

As described above, the image relief microstructures can be (+)-relief or (-) - relief image relief microstructures. As described above, in some cases the image relief microstructures can be (+)-relief image relief microstructures that upwardly project from the surface terminating in an arcuate image generating surface. In other cases, the image relief microstructures can be (-) -relief image relief microstructures that are voids formed within the surface terminating in an arcuate image generating surface. FIG. 15 illustrates an example of a moire magnification system that includes an array of (-)-relief image relief microstructures. The

(-)-relief image relief microstructures are voids formed within the surface 151 terminating in an arcuate image generating surface. The periodic surface curvature of the array illustrated in FIG. 15 is concave.

The arcuate image generating surfaces of the image relief microstructures in the array can have convex or concave periodic surface curvature across the array. FIG. 16 illustrates a moire magnification system that includes ( -relief image relief microstructures having concave periodic surface curvature. In this example, the microstructures are pressed into a substrate 152 (*e.g.*, embossed or stamped).

### Methods of Making

The moire magnification systems described herein can by formed using photolithographic patterning and microstructure mold making and replication processes known in the art. Using soft mold making to create a hard mold, a hard embossing tool can then be created. Once created, the hard embossing tool can be used, for example, to mold the array structure of the moire magnification systems into thermoformable plastic substrates or to cast curable polymers onto a substrate. The hard embossing tool can also be used to cast a negative mold onto a plastic carrier which can be filled with a releasable composition that can be transferred to a final substrate (*e.g.*, by a hot stamping or curing process) in a process similar to holographic foil transfer.

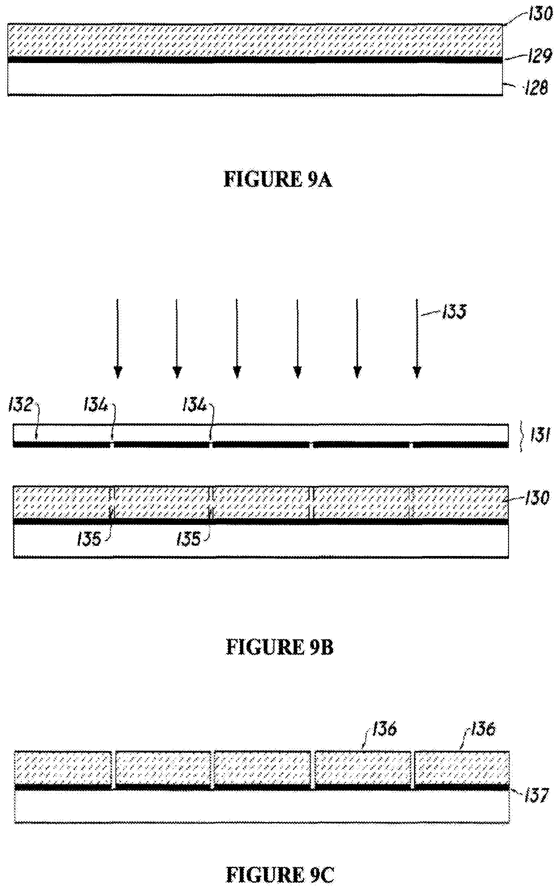

An example method for creating a master is illustrated in FIGS. 9A-9I. FIG. 9A illustrates a smooth glass substrate 128 which is covered by a layer of aluminum 129. On top of the aluminum 129, a layer of positive photoresist 130 is deposited. A chrome on glass photomask 131 with a curvature array pattern 132 is placed in contact with the photoresist 130, as shown in FIG. 9B. The structure is then exposed using collimated ultraviolet light 133, through the clear areas in the mask 134, allowing exposure of the photoresist only in the locations where photoresist is to be removed 135. The glass with photoresist is then placed in caustic developer solution so that the exposed areas are washed away along with the underlying aluminum. The result is photoresist cylinders 136 sitting on aluminum bases 137, where the bases will act as a boundary region that prevents the photoresist from wetting to the glass after heating, as shown in FIG. 9C.

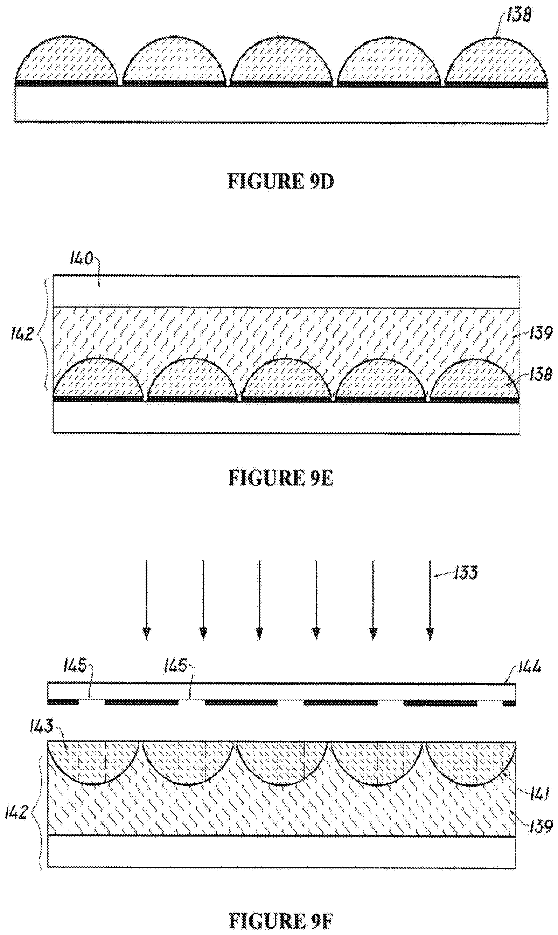

Next the glass is placed on a hotplate in order to melt the photoresist, creating shaped curvature structures 138 from the surface tension of the molten resist, as shown in FIG. 9D. Once cooled, a liquid photopolymer 139 is applied to the surface of the resist shapes 138, as shown in FIG. 9E, followed by a new glass cover substrate 140. The photopolymer is then hardened by flood exposure to ultraviolet light and lifted away from the photoresist structures. The result is soft master that includes an array of concave curvature shapes 141 in photopolymer attached to the new glass substrate. The soft curvature array master 142 can then be used to define the upper surface curvature of the final structure, but requires further processing to introduce the image shapes.

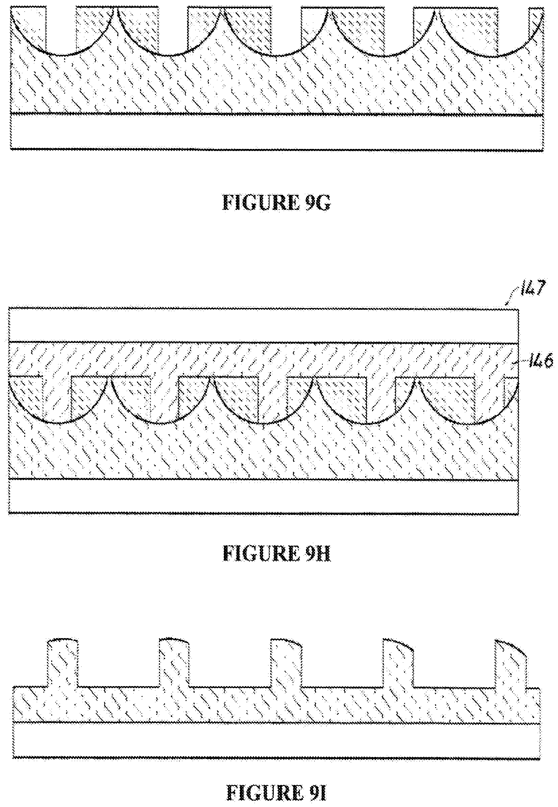

To introduce the image shapes, the concave voids of the soft curvature array master 142 are filled with photoresist 143. A photomask with image region patterning 144 is placed in contact with the photoresist filled soft master and exposed to collimated ultraviolet light 133, as shown in FIG. 9F. In this example, the image areas 145 on the mask are clear with opaque background, allowing exposure of the image areas into the photoresist. The structure is then placed in developer solution, developing away the exposed resist, leaving a negative version of the image array, shown in FIG. 9G.

Liquid photopolymer 146 can then be applied along with a glass cover substrate 147, as shown in FIG. 9H. The photopolymer can then be hardened by flood exposure to ultraviolet light, and removed, resulting in a moire magnification system that includes a periodic array of (+)-relief image relief microstructures having a convex periodic surface curvature, shown in FIG. 9I.

Each image relief microstructure, having in essence been sectioned from a curvature array element with its own characteristics, can be provided with greater or lesser curvature. Different fields of view can be provided by the system by altering the curvature, which can be tailored during the first steps of the mastering process (previously depicted in FIGS. 9A-9D). FIGS. 10A-10D illustrate how the curvature can be altered by providing a thicker or thinner layer of photoresist before patterning. When a thinner layer of photoresist 148 is used, there will be a lower volume of photoresist in an equivalent footprint, resulting in a shallower curvature element 149 after surface tensioning from the reflow process.

The structures formed in FIGS. 9G and 9I are soft embossing masters, meaning a few replicas of their surfaces can be made (*e.g.*, by filling the soft master with a curable composition, curing the composition, and removing the cured composition of the soft master) before damage is incurred. For a more robust mold, for example that can be used for mass production of a moire magnification system by hard or soft embossing, a hard master can be prepared and used.

A hard master is a metal embossing mold having a negative version of the desired microstructure, so that when its surface is replicated by embossing or casting, a positive version of the structure may be produced. A hard master can be formed by conductive metallization and electroforming, as is known in the art of DVD manufacturing. By way of example, the soft master illustrated in FIG. 9I can be coated with a thin layer of silver by vapor deposition, provided with electrical contact, and placed in nickel plating solution for electrodeposition. After a sufficient thickness of nickel has plated the surface (for example ¼ or ½ mm in thickness), the plated structure is removed from the solution. The electroformed hard master can then be peeled away from the soft master. A nearly unlimited number of soft embossments of the hard master's surface (a moire magnification system) can then be made from the surface of the hard master, provided the surface of the hard master remains unscratched or unabraided.

The hard master structure can also be copied onto further hard masters having mirrored structure if the electroforming process is repeated. In DVD mastering, the first nickel master is called the father, and the copies from the father surface are referred to as mothers. The mother can be used in production only if a mirror image of the original is desired. This can be useful if it is desired to switch between concave and convex structures, though text and nonsymmetrical images will be reversed. Otherwise, the mother electroform can be used to generate another electroform known as the son, which will have the same structure as the father, from which soft replicas or embossments can be made that match the structure of the original soft master.

To facilitate the mass production of the moire magnification system using conventional industrial printing equipment, the hard master father or son can be formed into a cylinder around a rigid core, so as to form a hard embossing cylinder. This cylinder can be used, for example, to continuously impress the moire magnification system into a web fed substrate by heated embossing, or to cast the moire magnification system onto a substrate surface using a curable polymer resin, such as an energy curable acrylate resin.

The hard master can made from electroformed nickel, but is not limited by the material used, as this can vary depending on production requirements. For example, master molds can be made from electroformed copper, or from modern rigid epoxies for light duty manufacturing. A master mold for a moire magnification system can also be formed by an additive manufacturing process such as 3D printing, provided the resolution is high enough. The print could be used directly or used to make further hard masters.

For heavy duty applications, such as high pressure stamping, a high hardness master die may be needed. To create such a tool, a nickel master mother can be coated with a first soft metal such as silver, which will act as a release layer. Next a layer of titanium nitride can be applied to the surface of the silver, which will impart superior hardness to the final master. The mother may then be placed inside a graphite die mold and the entire assembly heated to reduce effect of thermal shock. Molten carbon steel is then poured into the die mold, onto the face of the TiN coated mother. This can then be allowed to cool slowly or can be heat treated by quenching rapidly in oil to impart a high hardness. Upon cooling, the mold can be broken away, the backside of the steel planarized, and the mother peeled away from the cast steel die, separating at the silver interface. The hardened steel die having a thin layer of titanium nitride can be suitable for some applications where heavy duty stamping or metal casting is employed.

Also provided is a system for embellishing a surface (*e.g.*, a surface of a commercial product, such as a papers, polymeric, ceramic, or metallic surface) for the purpose of authentication or aesthetic improvement. The embellishing system can comprise a hard master that comprises a moire magnification system, as described herein. The embellishing system can be used to form a moire magnification system, as described herein, on the surface in one or more of the following ways:
By positive embossment of the substrate material from which the commercial product is formed (i.e., to form a (+)-relief image relief microstructure array on the surface of the substrate material);
By negative embossment to form voids (i.e., -)a ( -relief image relief microstructure array) within the substrate material from which the commercial product is formed;
By positive casting of additional material applied onto the surface of the commercial product (i.e., to form a (+)-relief image relief microstructure array on the surface of the substrate material);
By negative casting of additional material, including-a) ( -relief image relief microstructure array formed within the additional material.

### Methods of Use

The moire-type magnification systems can be provided in a variety of forms, depending on the intended application for the system. In certain embodiments, the moire-type magnification systems can be formed on an article or packaging for the article, for example, by embossing, casting, molding, or stamping the array of image relief microstructures on the article or packaging for the article. In certain embodiments, the moire-type magnification systems can be formed on a substrate (*e.g*., a polymer film or metallic foil) that can be applied to an article or packaging for the article (*e.g*., using an adhesive). The precise methods whereby the moire magnification systems are formed can be selected in view of a number of factors, including the nature of the substrate on or within which the system is formed, and overall production considerations (*e.g*., such that the method readily integrates into the manufacture of an article).

The moire-type magnification systems can be employed to provide authentication of articles (*e.g*., as a security and anti-counterfeiting feature to identify and distinguish authentic products from counterfeit products) and/or to provide visual enhancement of manufactured articles and packaging. The systems can be employed in many fields of use and applications. Examples include:
Government and defense applications-whether Federal, State or Foreign (such as Passports, ID Cards, Driver's Licenses, Visas, Birth Certificates, Vital Records, Voter Registration Cards, Voting Ballots, Social Security Cards, Bonds, Food Stamps, Postage Stamps, and Tax Stamps);
currency-whether Federal, State or Foreign (such as security threads in paper currency, features in polymer currency, and features on paper currency);
documents (such as Titles, Deeds, Licenses, Diplomas, and Certificates);
financial and negotiable instruments (such as Certified Bank Checks, Corporate Checks, Personal Checks, Bank Vouchers, Stock Certificates, Travelers' Checks, Money Orders, Credit cards, Debit cards, ATM cards, Affinity cards, Prepaid Phone cards, and Gift Cards);
confidential information (such as Movie Scripts, Legal Documents, Intellectual Property, Medical Records/Hospital Records, Prescription Forms/Pads, and "Secret Recipes");
product and brand protection, including Fabric & Home Care (such as Laundry Detergents, fabric conditioners, dish care, household cleaners, surface coatings, fabric refreshers, bleach, and care for special fabrics);
beauty care (such as Hair care, hair color, skin care & cleansing, cosmetics, fragrances, antiperspirants & deodorants, feminine protection pads, tampons and pantiliners);
baby and family care (such as Baby diapers, baby and toddler wipes, baby bibs, baby change & bed mats, paper towels, toilet tissue, and facial tissue);
health care (such as Oral care, pet health and nutrition, prescription pharmaceuticals, over-the counter pharmaceuticals, drug delivery and personal health care, prescription vitamins and sports and nutritional supplements; prescription and non-prescription eyewear; Medical devices and equipment sold to Hospitals, Medical Professionals, and Wholesale Medical Distributors (e.g., bandages, equipment, implantable devices, surgical supplies);
food and beverage packaging;
dry goods packaging;
electronic equipment, parts & components;
apparel and footwear, including sportswear clothing, footwear, licensed and non-licensed upscale, sports and luxury apparel items, fabric;
biotech pharmaceuticals;
aerospace components and parts;
automotive components and parts;
sporting goods;
tobacco Products;
software;
compact disks, DVDs, and Blu-Ray discs;
explosives;
novelty items (such as gift wrap and ribbon)
books and magazines;
school products and office supplies;
business cards;
shipping documentation and packaging;
notebook covers;
book covers;
book marks;
event and transportation tickets;
gambling and gaming applications (such as Lottery tickets, game cards, casino chips and items for use at or with casinos, raffle and sweepstakes);
home furnishing (such as towels, linens, and furniture);
flooring and wallcoverings;
jewelry & watches;
handbags;
art, collectibles and memorabilia;
toys;
displays (such as Point of Purchase and Merchandising displays); and
product marking and labeling (such as labels, hangtags, tags, threads, tear strips, over-wraps, securing a tamperproof image applied to a branded product or document for authentication or enhancement, as camouflage, and as asset tracking).

In certain embodiments, the moire-type magnification systems can be employed on a document or packaging for a document. The document can be, for example, a banknote, a check, a money order, a passport, a visa, a vital record (*e.g*., a birth certificate), an identification card, a credit card, an atm card, a license, a tax stamp, a postage stamp, a lottery ticket, a deed, a title, a certificate, or a legal document. In some embodiments, the moire-type magnification systems can be employed to provide visual enhancement of an article, such as coinage, CDs, DVDs, or Blu-Ray Discs, or packaging, such as aluminum cans, bottles (*e.g*., glass or plastic bottles), plastic film, or foil wrappers.

Example prophetic methods of manufacture are described in more detail below.

### 1. Embossing of Paper Substrates

In an example method of manufacture, a web fed paper substrate having a thermoformable polymeric coating is passed between a heated hard embossing cylinder for a moire magnification system and a smooth nip cylinder for applying uniform pressure. The heat and rolling pressure cause the thermoformable polymeric coating to flow into the master cylinder mold and, upon separation, the paper will have the moire-type magnification systems embossed or impressed into its coating. This method can be used, for example, to provide moire-type magnification systems on or within papers that have been varnished or provided with anti-soil coatings.

### 2. Embossing of Polymeric Film Substrates

In an example method of manufacture, a web fed biaxially oriented polypropylene film (BOPP) is hot embossed with a hard master for a moire magnification system. This method can be used, for example, to produce a moire magnification system on or within a polymer currency substrate, or to prepare labels that include a moire magnification system.

### 3. Embossing of Metallic Film Substrates

In an example method of manufacture, a polymeric film (*e.g.,* PET or BOPP), optionally having a thermformable layer and having a reflective metal layer, or reflective color shift layers, are hot embossed with a hard master for a moire magnification system, such that the moire magnification system is formed on or within the thermoformable layer and/or film, with the reflective metallic layer, or reflective color shift layers following periodic surface curvature of the image relief microstructures. The substrate can be, for example, a pre-existing base film used in the manufacture of holograms.

### 4. Casting on Metallic Film Substrates

In an example method of manufacture, a polymeric film having a metallic reflective coating, or having a color shifting reflective coating (such as color shift interference films that change color with tilt), is used as a substrate. The moire magnification system is cast on top of the reflective or color shift layers using UV curable resin and a strong UV curing source that can penetrate the metallic layer.

### 5. Casting on Polymeric Substrates

In an example method of manufacture, a polymeric film (*e.g.,* PET) can be used as a substrate and acrylate based UV curable resin can be used to cast the moire magnification system from a hard embossing cylinder for a moire magnification system. The casting can involve UV curing and releasing the curable resin from the master in a continuous process. The resulting moire magnification system can then be metalized, and applied to a final substrate (*e.g.,* an article or packing for an article) with an adhesive.

### 6. Casting Using Microparticulate Powders

In an example method of manufacture, the moire magnification system can be formed from the master using a micro- or nano-particulate reflective powder composition. This opens up a wide field of applications where optically variable inks or powder compositions (OVIs) are used, and allows OVI's to be delivered to a substrate in a pattern that results in a moire magnified composite image. By gravure-like doctor blading of the particulate inks into a master cylinder having negative representations of the final moire magnification system, the inks can be 'demolded' or cast onto a substrate, so that the precise microstructure is imparted into the surface of the OVI, resulting in a more spectacular reflection profile than the static inks alone. This OVI molding can also be combined with magnetic domain oriented particles.

### 7. Molding or Casting Using Microparticulate Powders

In an example method of manufacture, a paper or plastic substrate can be provided with that includes an unpatterned region (i.e., a microstructurally unpatterned surface, in other words; macro shapes are included here) comprising a micro- or nanoparticulate powder containing composition, such as an OVI composition. The moire magnification system can subsequently be patterned or embossed on or within the micro- or nanoparticulate powder containing composition using a hard master with applied pressure and/or heat.

### 8. Casting Using Microparticulate Powders with an Overcoat

In an example method of manufacture, reflective powder containing compositions, such as titanium dioxide in UV curable acrylic resin, can be doctor bladed into the a master for the moire magnification system, and transferred to a paper or plastic substrate by UV curing, forming a moire magnification system on the surface. The entire surface may then be overcoated or varnished with a clear composition, such as UV curable acrylic, to impart a glossy finish that sharpens the reflection profile and appearance of the magnified moire image formed by the moire magnification system.

### 9. Casting Transparent Structures Using Microparticulate Powders

In an example method of manufacture, a substrate having been coated with a titanium dioxide containing composition or other reflective powder containing composition, can have a transparent moire magnification system cast on top of the reflective powder containing composition, such that the brightness of the magnified moire image formed by the moire magnification system is enhanced.

### 10. Stamping of Metal Substrates

In an example method of manufacture, a heat treated steel master die for the moire magnification system can be used to forge stamp the moire magnification system into soft metals, such as aluminum beverage can lids or coins.

### 11. Stamping of Foils

In an example method of manufacture, a master for the moire magnification system can be used to emboss the moire magnification system into aluminum foil or into aluminum/polymer composite substrates, such as those conventionally used for chewing gum wrappers, foil blister packs (*e.g*., the foil backings of blister packs used for pharmaceuticals), food packaging, and beauty care product packaging.

### 12. Molding or Casting an Adhesive Material

In an example method of manufacture, a transparent film having a dry extruded adhesive is provided. An master embossing cylinder for the moire magnification system can be used to emboss a (-)-relief array of image relief microstructures in the pliable adhesive. Next, a reflective ink composition or a tinted UV curable resin can be doctor bladed into the voids formed in the adhesive surface. A security laminate is thus created having a moire magnification system embedded within the adhesive. This laminate can then be bonded to a security document with heated lamination, encapsulating the moire magnification system between overlaminate and the document, such that attempts to tamper with the laminate will destroy or disrupt the moire magnification system.

### 13. In-Mold Decoration

In an example method of manufacture, a master for the moire magnification system can be used for in-mold decoration or embellishment during plastic extrusion, injection molding, vacuum forming, blow molding, die casting or other forms of molding plastic. For example, a plastic water bottle mold can have the moire magnification system structure molded into the bottom of the bottle to indicate that the bottle is BPA-free and is not a counterfeit.

As noted above, according to the invention, the microstructures do not extend from an arcuate image generating surface to a planar optical surface but instead start or terminate somewhere between these surfaces. More specifically, the single layer image projection system according to the invention comprises a material layer, which is made up of an arrangement of optionally reflective arcuate elements having an upper arcuate surface, a lower surface, and an arcuate area bounded by the upper arcuate and lower surfaces, and an optionally reflective pattern of image relief microstructures disposed on or within at least some of the upper arcuate surfaces of the arcuate elements. The arcuate elements may have upper arcuate surfaces that are curved surfaces such as sine wave surfaces, egg-crate shaped structures, structures with elliptical, parabolic, hyperbolic, or other non-spherical cross sections, as well as structures with spherical cross sections. The arrangement of optionally reflective arcuate elements and the optionally reflective pattern of image relief microstructures are in a single layer and interact to project one or more images. For an upper arcuate surface with convex surface curvature, the image relief microstructures extend downwardly from this surface terminating within the arcuate area distal from the lower surface, and for an upper arcuate surface with concave surface curvature, the image relief microstructures extend upwardly from this surface terminating within an area defined by the curvature of the upper arcuate surface. In a preferred embodiment, the arcuate elements and the image relief microstructures are arranged in repeating patterns and interact to project one or more images (*e.g.,* one or more magnified moire images).

In one such preferred embodiment, the inventive single layer image projection system projects one or more magnified moire images. The inventive system comprises a repeating pattern of optionally reflective arcuate elements having an upper arcuate surface, a lower surface, and an arcuate area bounded by the upper arcuate and lower surfaces, and an optionally reflective repeating pattern of image relief microstructures disposed on or within at least some of the upper arcuate surfaces of the arcuate elements. As noted above, for an upper arcuate surface with convex surface curvature, the image relief microstructures extend downwardly from this surface terminating within the arcuate area distal from the lower surface, and for an upper arcuate surface with concave surface curvature, the image relief microstructures extend upwardly from this surface terminating within an area defined by the curvature of the upper arcuate surface.

The inventive single layer image projection system relies on principles of specular reflection. As such, arcuate image generating surfaces of the inventive single layer image projection system may be any type of repeating curved surface and are not limited to focusing elements (*e.g.*, lenses).

The preferred dimensions of the upper arcuate surfaces and the repeat period of these surfaces (*e.g.*, radius of curvature of each upper arcuate surface (preferably from about 1 micron to about 500 microns), size of each upper arcuate surface (measured between two lattice points on the surface) (preferably less than about one millimeter), the upper arcuate surface pattern's repeat period (preferably from about 1 micron to about 1000 microns), etc.) are described above. In addition, the scale ratios (*i.e.,* the ratio of the repeat period of image relief microstructures to the repeat period of the upper arcuate surfaces) and necessary axial alignment or misalignment of the repeating patterns for achieving different optical effects is also described above.

Interstitial space between each upper arcuate surface in the repeating pattern used in the present invention is preferably from about 0 to about 2 microns for micro-scale systems with a total thickness of less than about 100 microns, while interstitial space in inventive macro-scale systems is typically greater in size, preferably greater than about 10 millimeters.

The upper arcuate surfaces and image relief microstructures (or portions thereof) may be rendered reflective to darken the projected image(s). For example, the profiles of the concave or convex upper arcuate surfaces and microstructures (or portions thereof) may be provided with a reflecting metal layer (*e.g*., a vapor deposited metal layer). Instead of a fully opaque reflecting metal layer, a semitransparent (or partially metalized) metal layer, or a high refractive index layer can be provided. Furthermore, multiple layers of vapor deposited material may be used to provide reflectivity, for example, color-shifting interference coatings formed from dielectric layers, or from a combination of metal and dielectric layers such as metal/dielectric/metal may also provide the necessary reflectivity.

These reflective (metalized) embodiments work off the principle of reflection as opposed to scattering and refraction. The ideal illumination is a point light source (like a clear day sky). The projected image(s) will typically be the color of the reflective material and/or illumination source. If the upper arcuate surfaces are made out of a material that is already colored or reflective, however, then the background of the projected image(s) may take on this character.

When the upper arcuate surfaces and image relief microstructures are not rendered reflective, the projected image(s) will be weak, but discernable. This allows for covert images to be hidden within the inventive single layer image projection system as well as in multi-layer image projection systems. In one such embodiment, a patterned metallization process (or a patterned demetallization process) is used to form zones (*i.e.,* metalized zones) on the upper arcuate surfaces where the projected image(s) (and any of its various effects) is apparent. The metalized zones would be intermingled with zones (*i.e.,* non-metalized zones) where the projected image(s) is less apparent or weak, but discernable. In another such embodiment, the inventive single layer system and a multi-layer image projection system are combined or integrated into a single device (*e.g.*, security strip, thread or patch) in, for example, a side-by-side or alternating arrangement. Examples of such multi-layer image projection systems are described in U.S. Patent No. 7,333,268 to Steenblik et al., U.S. Patent No. 7,468,842 to Steenblik et al., and U.S. Patent No. 7,738,175 to Steenblik et al. In this embodiment, depressions or voids may also be incorporated into focusing elements (*e.g*., refractive lenses, reflective lenses) of the multi-layer system, and metalized zones and non-metalized zones may be used on the multi-layer system to provide areas where the projected image(s) resulting from the depressions or voids is apparent and areas where the projected image(s) is less apparent or weak, but discernable. Such a device, whether made up of only the inventive single layer system or a combination of the inventive single layer system and a multi-layer system is a complex structure and extremely tamper resistant.

The image relief microstructures used in the practice of the present invention are arranged in relation to the arcuate elements to provide one or more projected images. For reflective embodiments, image relief microstructures and upper arcuate surfaces are engineered so that the reflection of light is the source of the image(s). In other words, the size, depth, roughness, number and location of the image relief microstructures, as well as the curvature of the upper arcuate surfaces are engineered to achieve this result.

General relationships between these parameters are as follows:
(a) Curvature of the upper arcuate surfaces: a higher curvature relates to a slower movement of a specular reflection spot against a surface, which means that a system with upper arcuate surfaces with a lower curvature can be made to have "faster moving" images.
(b) The size, depth, and roughness of the depressions or voids are interrelated variables. But in general:
   (i) "larger" depressions (in terms of width along the length of the system) will form larger projected images;
   (ii) "deeper" depressions can lead to higher contrast edges on the projected images. However, if they are very deep they may have a similar effect as a rough depression (as described below); and
   (iii) "rough" depressions (*i.e.,* depressions having an uneven or irregular surface; not smooth or level) form higher contrast projected images. The rougher the depression (the less that it reflects light as opposed to scattering it) the sharper the resulting image. This causes essentially a bright background and a dark image. The degree of light scattering from each depression may be used to measure the depression's level of roughness.

The (-)-relief image relief microstructures (*i.e.,* depressions or voids) are formed with substantially vertical (or slanted) sidewalls leading down to a horizontal "lower" surface. Advantageously, it has been found that slanted sidewalls (especially obtusely slanted sidewalls), like shallow voids, facilitate ease of removal of the inventive single layer system from a mold cavity. The sidewalls and "lower" surfaces may be smooth or rough in texture. The depressions or voids may be coated and/or partially or completely filled with another material (*e.g*., a pigmented material(s)). The size, form, shape and color of the depressions are not limited. In fact, embodiments are contemplated in which two or more types of depressions or voids (*e.g*., micro- and nano-sized voids) are used.

The (+)-relief image relief microstructures are formed with substantially vertical (or slanted) sidewalls, which extend down from or lead up to a horizontal surface. Again, slanted sidewalls, especially obtusely slanted sidewalls, like shallow voids, facilitate ease of removal of the inventive single layer system from a mold cavity. The sidewalls and "upper" or "lower" surfaces may be smooth or rough in texture and the size, form, shape and color of the (+)-relief image relief microstructures is not limited. The areas surrounding the (+)-relief image relief microstructures may be coated and/or partially or completely filled with another material (*e.g*., a pigmented material(s)).

It is not necessary in the practice of the present invention for the image relief microstructures to be the same or to be disposed on or within every upper arcuate surface. Instead, for example, the same or different image relief microstructures may be disposed on or within upper arcuate surfaces in select regions or zones of the repeating pattern of these surfaces.

Two embodiments of the inventive system are shown in FIGS. 18 and 19. In FIG. 18, the system 10 includes an arrangement in the form of a pattern of arcuate elements 12 having upper arcuate surfaces 20 with a concave surface curvature. (+)-relief image relief microstructures 14 extend upwardly from the upper arcuate surfaces 20 terminating to form a horizontal "upper" surface 16 within areas 18 defined by the curvature of the upper arcuate surfaces 20. While not depicted in FIG. 18, it is also contemplated that the image relief microstructures extend downward from upper arcuate surface 20 to a location within the arcuate area that is distal from the lower surface. In FIG. 19, the system 10 includes a pattern of arcuate elements 22 having upper arcuate surfaces 30 with convex surface curvature. (-)-relief image relief microstructures 24 extend down from these surfaces terminating to form horizontal "lower" surfaces 26 within arcuate areas 28. While not depicted in FIGS. 18 and 19, but as noted above, the image relief microstructures disposed on or within at least some of the upper arcuate surfaces may have different sizes, forms, shapes, colors and/or levels of reflectivity.

Two not claimed examples of the present disclosure are shown in FIGS. 20 and 21. In FIG. 20, the system 10 includes a pattern of arcuate elements 32 having upper arcuate surfaces 36 with a concave surface curvature. (+)-relief image relief microstructures 34 extend upwardly from upper arcuate surfaces 36 terminating to form a second curved surface 38 that is substantially parallel to the upper arcuate surfaces 36. In a not claimed example, these surfaces are parallel.

In FIG. 21, the system 10 includes a pattern of arcuate elements 40 having upper arcuate surfaces 46 with convex surface curvature. (-)-relief image relief microstructures (depressions or voids) 42 extend down from these surfaces terminating to form a second curved surface 44 that is substantially parallel to upper arcuate surfaces 46 (*i.e.,* a first arcuate or curved surface). In a not claimed example, these surfaces are parallel. In both of these not claimed examples, the first and the second curved surfaces reflect light radially thereby providing improved optical effects in the form of images that have dark edges, with bright interiors and bright exteriors (like an outline drawing). These optical effects may be further improved by using "rougher" depressions, which will provide clearer images having more consistent sharpness.

In FIG. 22, a pattern of arcuate elements 48 having upper arcuate surfaces with convex surface curvature is shown. Unlike the earlier not claimed examples, in the not claimed example of Fig. 22, the arcuate elements 48 in FIG. 22 are not full convex hemispheres but instead are partial convex hemispheres. When viewing this system from the side facing image relief microstructures 50, the system will project one or more bright images, but when viewed from the side facing away from these microstructures 50, the system will either project no image or one or more weak images.

In FIG. 23, a not claimed example of a pattern of arcuate elements 52 having upper arcuate surfaces with concave surface curvature is shown. Here, the arcuate elements 52 are not full concave hemispheres but instead are partial concave hemispheres. As above, when viewing this system from the side facing image relief microstructures 54, the system will project one or more bright images, but when viewed from the side facing away from these microstructures 54, the system will either project no image or one or more weak images.

While the upper surfaces of the (+)-relief image relief microstructures and the lower surfaces of the (-)-relief image relief microstructures are shown in FIGS. 18-23 as being level or on the same plane, this is not necessary for the practice of the present invention or described not claimed examples.

The single layer image projection system and in particular, the arcuate elements and image relief microstructures may be formed from a variety of materials such as substantially transparent or clear, colored or colorless polymers such as acrylics, acrylated polyesters, acrylated urethanes, epoxies, polycarbonates, polypropylenes, polyesters, urethanes, and the like. High refractive index, colored or colorless materials having refractive indices (at 589 nanometers, 20°C) of more than 1.5, 1.6, 1.7, or higher, such as those described in U.S. Patent No. 8,557,369 to Hoffmuller et al., may also be used in the practice of the present invention.

The arcuate elements and image relief microstructures may also be formed from a composition that includes microparticulate reflective powder. As will be readily appreciated by those skilled in the art, the resulting system will be reflective without the need to add one or more reflective layers.

In addition to the exemplary embodiments described above, the image relief microstructures may also be formed by a patterned reflective (*e.g*., metal) coating that conforms to the upper arcuate surfaces. In this embodiment, the convex or concave upper arcuate surfaces are each provided with a reflective pattern of reflecting and non-reflecting zones.

Preferred methods and techniques for forming single layer image projection systems, which include the use of lasers, photolithography, etching, small scale 3D printing, machining, and the like, are mentioned above.

In an exemplary method of manufacture of the single layer image projection system of the present invention, a lens tool incorporating a repeating pattern of concave arcuate elements, such as those described in U.S. Patent No. 7,333,268 to Steenblik et al., U.S. Patent No. 7,468,842 to Steenblik et al., and U.S. Patent No. 7,738,175 to Steenblik et al., is used. The lens tool is coated with a reflective metal and then the recesses or cups (*i.e.*, areas defined by the arcuate image generating surfaces) of the lens tool are filled or partially filled with photoresist. A photomask incorporating a repeating pattern of image icons that coincide with the desired repeating pattern of image relief microstructures is positioned over the lens tool and then the photoresist in the recesses or cups is exposed through the photomask to collimated ultraviolet (UV) light. The image icons of the photomask block the UV light thereby causing shadows to form on the filled or partially filled, metalized recesses or cups. As a result, the concave arcuate elements are not cured or fully cured in these shadow regions, which cause depressions to form in the metalized surface. The resulting repeating pattern of concave arcuate elements with depressions (*i.e.*, repeating pattern of image relief microstructures) produces optical effects, as described above, without the need to form a further embossed surface.

The optical effects achieved by these other contemplated embodiments are described above and also in U.S. Patent No. 7,333,268 to Steenblik et al., U.S. Patent No. 7,468,842 to Steenblik et al., and U.S. Patent No. 7,738,175 to Steenblik et al. The optical effects include, but are not limited to, movement or motion including, but not limited to, orthoparallactic movement or motion, float, deep, levitate, morph and/or 3-D effects as the system is tilted or as the viewing angle changes. In particular, the inventive system may project one or more magnified moire images that:
i. show movement as the system is tilted or viewed from different viewing angles;
ii. appear to lie on a spatial plane deeper than the thickness of the system;
iii. appear to lie on a spatial plane above a surface of the system;
iv. oscillate between a spatial plane deeper than the thickness of the system and a spatial plane above a surface of the system as the system is azimuthally rotated;
v. transform from one form, shape, size and/or color into a different form, shape, size and/or color as the system is either azimuthally rotated or viewed from different viewpoints; and/or
vi. appear as a three-dimensional image(s).

The inventive single layer image projection system, which may be used alone or in combination with a multi-layer image projection system, may take any shape including, but not limited to, bands, strips, stripes, threads, or patches, and may be formed directly on a target surface or as a free-standing device for subsequent transfer to a target surface.

The inventive system as a free-standing device may be prepared by forming repeating patterns of arcuate elements and image relief microstructures out of a transparent material on a carrier film (or other substrate). The repeating upper arcuate surfaces and microstructures are then coated with metal (metallized). Because the original structure was transparent, both sides of this system or device will project images. An adhesive is applied over the metallized repeating upper arcuate surfaces resulting in a device that is ready to be transferred to a target surface. The adhesive is pressed to a target surface, and the adhesive activated to form a bond between the target surface and the device. The carrier film is peeled away, leaving behind a free-standing structure that has the following advantage: now the microstructures are encased in a clear material. This makes them more resilient to soiling and other detrimental environmental effects.

The thickness of the inventive system is not limited and can range from very thin (*i.e.,* a couple of microns or perhaps even less) for micro-scale systems to very thick (*i.e.,* inches, feet, etc.) for macro-scale systems.

The present invention further provides fibrous and non-fibrous (*e.g*., polymer) sheet materials that are made from or employ the inventive system, as well as documents made from these materials (*e.g.*, paper and polymer currency). The term "documents", as used herein designates documents of any kind including documents having financial value, such as banknotes or currency, bonds, checks, traveler's checks, lottery tickets, postage stamps, stock certificates, title deeds and the like, identity documents, such as passports, ID cards, driving licenses and the like, and non-secure documents, such as labels. The inventive single layer image projection system is also contemplated for use with goods (consumer or non-consumer goods) as well as bags, packaging, or labels used with these goods.

Other contemplated end-use applications for the inventive system include products for projecting larger dimension images such as advertising and multimedia displays (*e.g*., billboards, traffic and industrial safety signs, commercial displays for marketing or tradeshow purposes), products for enhancing a vehicle's appearance (*e.g*., decal, wrap), decorative wrap and wallpaper, shower curtains, artistic displays, and the like.

The devices, systems, and methods of the appended claims are not limited in scope by the specific devices, systems, and methods described herein, which are intended as illustrations of a few aspects of the claims.

The term "comprising" and variations thereof as used herein is used synonymously with the term "including" and variations thereof and are open, non-limiting terms. Although the terms "comprising" and "including" have been used herein to describe various embodiments, the terms "consisting essentially of" and "consisting of" can be used in place of "comprising" and "including" to provide for more specific embodiments of the invention and are also disclosed. Other than where noted, all numbers expressing geometries, dimensions, and so forth used in the specification and claims are to be understood at the very least, and not as an attempt to limit the application of the doctrine of equivalents to the scope of the claims, to be construed in light of the number of significant digits and ordinary rounding approaches.

Unless defined otherwise, all technical and scientific terms used herein have the same meanings as commonly understood by one of skill in the art to which the disclosed invention belongs.

## Claims

1. A single layer image projection system for projecting one or more images that comprises an arrangement of optionally reflective arcuate elements (12, 22) having an upper arcuate surface (20, 30), a lower surface, and an arcuate area bounded by the upper arcuate and lower surfaces, and an optionally reflective pattern of image relief microstructures (107) disposed on or within at least some of the upper arcuate surfaces of the arcuate elements, wherein the arrangement of optionally reflective arcuate elements and the optionally reflective pattern of image relief microstructures are in a single layer and interact to project one or more images,
**characterized in that**:
for an upper arcuate surface (30) with convex surface curvature, the image relief microstructures (24) extend downwardly from this surface terminating within the arcuate area (28), and
for an upper arcuate surface (20) with concave surface curvature, the image relief microstructures (14) extend upwardly from this surface terminating within an area (18) defined by the curvature of the upper arcuate surface (20);
wherein the image relief microstructures (14, 24) have sidewalls and either an upper or lower horizontal surface;
wherein the image relief microstructures are selected from the group consisting of (+)-relief image relief microstructures, (-)-relief image relief microstructures, and combinations thereof;
wherein the sidewalls of the (-)-relief image relief microstructures are vertical or slanted sidewalls and wherein the sidewalls of the (+)-relief image relief microstructures are vertical or slanted sidewalls.

2. The single layer image projection system of claim 1, which is combined with a multi-layer image projection system comprising an arrangement of focusing elements and an arrangement of image icons, which interact to project one or more images,
wherein optionally voids or depressions are incorporated into the focusing elements of the multi-layer image projection system, wherein the optional voids or depressions form one or more covert images which are not apparent when the system is viewed using a point light source.

3. The single layer image projection system of claim 1, wherein the upper or lower horizontal surface is uneven or irregular.

4. The single layer image projection system of claim 1, wherein the upper arcuate surfaces (20, 30) are shaped like domes approximating full hemispheres
or
wherein the upper arcuate surfaces (20, 30) are shaped like partial domes approximating partial hemispheres.

5. A sheet material having opposing surfaces and comprising at least one single layer image projection system of claim 1 that is either mounted on, or partially embedded within, a surface of the sheet material, or partially embedded within the sheet material.

6. A sheet material prepared from the single layer image projection system of claim 1.

7. A document prepared from the sheet material of claim 5.

8. A document prepared from the sheet material of claim 6.

9. A consumer or non-consumer good which has at least one single layer image projection system of claim 1 that is either (a) mounted on, or embedded within, a surface of the good, or bags, packaging, or labels used with the good, or (b) partially embedded within the good, or bags, packaging, or labels used with the good.

10. A product for projecting large dimension images that comprises at least one single layer image projection system of claim 1 mounted on, or embedded within, a surface thereof, wherein the product is selected from the group of advertising and multimedia displays, products for enhancing a vehicle's appearance, decorative wrap, wallpaper, shower curtains, and artistic displays.

## Patentansprüche

1. Einschichtiges Bildprojektions-System zum Projizieren eines oder mehrerer Bilder, das eine Anordnung optional reflektierender bogenförmiger Elemente (12, 22) mit einer oberen bogenförmigen Fläche (20, 30), einer unteren Fläche und einem bogenförmigen Bereich, der durch die obere bogenförmige und die untere Fläche begrenzt wird, sowie ein optional reflektierendes Muster aus Bildrelief-Mikrostrukturen (107) umfasst, das auf oder innerhalb wenigstens einiger der oberen bogenförmigen Flächen der bogenförmigen Elemente angeordnet ist, wobei die Anordnung optional reflektierender bogenförmiger Elemente und das optional reflektierende Muster aus Bildrelief-Mikrostrukturen sich in einer einzelnen Schicht befinden und zusammenwirkend ein oder mehrere Bild/er projizieren,
**dadurch gekennzeichnet, dass**:
bei einer oberen bogenförmigen Fläche (30) mit konvexer Flächenkrümmung sich die Bildrelief-Mikrostrukturen (24) von dieser Fläche nach unten erstrecken und innerhalb des bogenförmigen Bereiches (28) enden, und
bei einer oberen bogenförmigen Fläche (20) mit konkaver Flächenkrümmung sich die Bildrelief-Mikrostrukturen (14) von dieser Fläche nach oben erstrecken und innerhalb eines Bereiches (18) enden, der durch die Krümmung der oberen bogenförmigen Fläche (20) definiert wird;
wobei die Bildrelief-Mikrostrukturen (14, 24) Seitenwände und entweder eine obere oder untere horizontale Fläche aufweisen;
wobei die Bildrelief-Mikrostrukturen aus der Gruppe ausgewählt werden, die aus (+)-Relief-Bildrelief-Mikrostrukturen, (-)-Relief-Bildrelief-Mikrostrukturen und Kombinationen daraus besteht;
wobei die Seitenwände der (-)-Relief-Bildrelief-Mikrostrukturen vertikal oder schräg sind und wobei die Seitenwände der (+)-Relief-Bildrelief-Mikrostrukturen vertikal oder schräg sind.

2. Einschichtiges Bildprojektions-System nach Anspruch 1, das mit einem mehrschichtigen Bildprojektions-System kombiniert ist, das eine Anordnung fokussierender Elemente und eine Anordnung von Bildsymbolen umfasst, die zusammenwirkend ein oder mehrere Bild/er projizieren,
wobei optional Hohlräume oder Vertiefungen in die fokussierenden Elemente des mehrschichtigen Bildprojektions-Systems integriert sind, und die optionalen Hohlräume oder Vertiefungen ein oder mehrere verdecktes/verdeckte Bild/er erzeugen, die nicht sichtbar sind, wenn das System unter Verwendung einer Punktlichtquelle betrachtet wird.

3. Einschichtiges Bildprojektions-System nach Anspruch 1, wobei die obere oder untere horizontale Fläche uneben oder unregelmäßig ist.

4. Einschichtiges Bildprojektions-System nach Anspruch 1, wobei die oberen bogenförmigen Flächen (20, 30) wie Kuppeln geformt sind, die annähernd vollständige Halbkugeln sind oder
die oberen bogenförmigen Flächen (20, 30) wie Teil-Kuppeln geformt sind, die annähernd Teil-Halbkugeln sind.

5. Blattmaterial, das einander gegenüberliegende Flächen aufweist und wenigstens ein einschichtiges Bildprojektions-System nach Anspruch 1 umfasst, das entweder auf einer Oberfläche des Blattmaterials angebracht oder teilweise in sie eingebettet ist oder teilweise im Inneren des Blattmaterials eingebettet ist.

6. Blattmaterial, das aus dem einschichtigen Bildprojektions-System nach Anspruch 1 gefertigt ist.

7. Dokument, das aus dem Blattmaterial nach Anspruch 5 gefertigt ist.

8. Dokument, das aus dem Blattmaterial nach Anspruch 6 gefertigt ist.

9. Konsumgut oder Nicht-Konsumgut, das wenigstens ein einschichtiges Bildprojektions-System nach Anspruch 1 aufweist, das entweder (a) auf einer Oberfläche des Gutes oder mit dem Gut verwendeten Beuteln, Verpackungen oder Etiketten angebracht oder darin eingebettet ist, oder (b) teilweise in das Gut oder in mit dem Gut verwendete Beutel, Verpackungen oder Etiketten eingebettet ist.

10. Produkt zum Projizieren großformatiger Bilder, das wenigstens ein einschichtiges Bildprojektions-System nach Anspruch 1 umfasst, das auf einer Oberfläche desselben angebracht oder darin eingebettet ist, wobei das Produkt aus der Gruppe von Werbungs- und Multimedia-Displays, Produkten zum Verbessern des Erscheinungsbildes eines Fahrzeugs, dekorativen Verpackungen, Tapeten, Duschvorhängen und künstlerischen Displays ausgewählt wird.

## Revendications

1. Système de projection d'image à couche unique pour projeter une ou plusieurs images qui comprend un arrangement d'éléments arqués facultativement réfléchissants (12, 22) ayant une surface arquée supérieure (20, 30), une surface inférieure, et une zone arquée délimitée par les surfaces arquées supérieures et inférieures, et un motif facultativement réfléchissant de microstructures en relief d'image (107) disposées sur ou dans au moins certaines des surfaces arquées supérieures des éléments arqués, dans lequel l'agencement d'éléments arqués facultativement réfléchissants et le motif facultativement réfléchissant de microstructures en relief d'image sont dans une couche unique et interagissent pour projeter une ou plusieurs images,
**caractérisé en ce que** :
pour une surface arquée supérieure (30) ayant une courbure de surface convexe, les microstructures en relief d'image (24) s'étendent vers le bas depuis cette surface et se terminent à l'intérieur de la zone arquée (28), et
pour une surface arquée supérieure (20) avec une courbure de surface concave, les microstructures en relief d'image (14) s'étendent vers le haut à partir de cette surface et se terminent dans une zone (18) définie par la courbure de la surface arquée supérieure (20) ;
dans lequel les microstructures en relief d'image (14, 24) ont des parois latérales et une surface horizontale supérieure ou inférieure ;
dans lequel les microstructures en relief d'image sont choisies parmi le groupe constitué par les microstructures en relief d'image (+), les microstructures en relief d'image (-) et les combinaisons de ces microstructures ;
dans lequel les parois latérales des microstructures en relief d'image (-) sont verticales ou inclinées et dans lequel les parois latérales des microstructures en relief d'image (+) sont verticales ou inclinées.

2. Système de projection d'image à couche unique selon la revendication 1, combiné à un système de projection d'image multicouche comprenant un ensemble d'éléments de focalisation et un ensemble d'icônes d'images, qui interagissent pour projeter une ou plusieurs images,
dans lequel des vides ou des dépressions sont facultativement incorporés dans les éléments de focalisation du système de projection d'image multicouches, dans lequel les vides ou les dépressions optionnels forment une ou plusieurs images cachées qui ne sont pas apparentes lorsque le système est visualisé à l'aide d'une source lumineuse ponctuelle.

3. Système de projection d'image à couche unique selon la revendication 1, dans lequel la surface horizontale supérieure ou inférieure est inégale ou irrégulière.

4. Système de projection d'image à couche unique selon la revendication 1, dans lequel les surfaces arquées supérieures (20, 30) ont la forme de dômes se rapprochant d'hémisphères complets, ou
dans lequel les surfaces arquées supérieures (20, 30) ont la forme de dômes partiels se rapprochant d'hémisphères partiels.

5. Matériau en feuille ayant des surfaces opposées et comprenant au moins un système de projection d'image à couche unique selon la revendication 1 qui est soit monté sur, ou partiellement incorporé dans, une surface du matériau en feuille, ou partiellement incorporé dans le matériau en feuille.

6. Matériau en feuille préparé à partir du système de projection d'image à couche unique selon la revendication 1.

7. Document préparé à partir du matériau en feuille selon la revendication 5.

8. Document préparé à partir du matériau en feuille selon la revendication 6.

9. Bien de consommation ou non de consommation comportant au moins un système de projection d'image à couche unique selon la revendication 1 qui est soit (a) monté sur, ou intégré dans, une surface de la marchandise, ou des sacs, emballages ou étiquettes utilisés avec la marchandise, soit (b) partiellement intégré dans la marchandise, ou les sacs, emballages ou étiquettes utilisés avec la marchandise.

10. Produit pour projeter des images de grandes dimensions qui comprend au moins un système de projection d'image à couche unique selon la revendication 1 monté sur, ou intégré dans, une surface de celui-ci, dans lequel le produit est choisi dans le groupe des affichages publicitaires et multimédias, de produits pour améliorer une apparence d'un véhicule, d'une pellicule décorative, d'un papier peint, d'un rideau de douche, et d'affichages artistiques.
